# EUROPEAN PATENT SPECIFICATION

(11) **EP 4 490 930 B1**
(45) Date of publication and mention of the grant of the patent: **16.09.2026**
(21) Application number: 22713912.8
(22) Date of filing: 10.03.2022
(51) Int. Cl.: H04W 12/06, H04W 4/24, H04W 4/60, H04W 8/18, H04W 12/069, H04M 15/00, H04M 17/00, H04W 4/70, H04W 8/20

(54) **DOWNLOAD OF A SUBSCRIPTION PROFILE TO A COMMUNICATION DEVICE**
HERUNTERLADEN EINES ABONNEMENTPROFILS AUF EINE KOMMUNIKATIONSVORRICHTUNG
TÉLÉCHARGEMENT VERS L'AVAL D'UN PROFIL D'ABONNEMENT VERS UN DISPOSITIF DE COMMUNICATION

(43) Date of publication of application: 15.01.2025
(73) Proprietor: Telefonaktiebolaget LM Ericsson (publ), 164 83 Stockholm (SE)
(72) Inventor: STÅHL, Per, 218 51 Klagshamn (SE); SÄÄSKILAHTI, Juha, 02230 Espoo (FI)
(74) Representative: Ericsson
(86) International application number: PCT/EP2022/056191
(87) International publication number: WO 2023/169682

(56) References cited:
- EP-A1- 3 171 622
- EP-A1- 3 557 895
- US-A1- 2021 385 635
- "3rd Generation Partnership Project; Technical Specification Group Services and System Aspects; Study on the security aspects of the next generation system (Release 14)", 27 September 2017 (2017-09-27), XP051361245, Retrieved from the Internet <URL:http://www.3gpp.org/ftp/tsg_sa/WG3_Security/TSGS3_LI/2017_66bis_Sophia/Docs/> [retrieved on 20170927]

## Description

### TECHNICAL FIELD

Embodiments presented herein relate to a method, a communication device, a computer program, and a computer program product for subscription profile download. Further embodiments presented herein relate to methods, a subscription management entity, computer programs, and a computer program product for enabling subscription profile download to the communication device.

### BACKGROUND

The Global System for Mobile communication Alliance (GSMA) has specified how to provide subscribers with third generation partnership project (3GPP) subscription profiles, often denoted Subscriber Identity Module (SIM) profiles, hereinafter denoted subscription profiles. Such subscription profiles can be remotely downloaded over the Internet to the physical hardware in the communication device known as embedded Universal Integrated Circuit Card (eUICC) or integrated Universal Integrated Circuit Card (iUICC) or integrated embedded Universal Integrated Circuit Card (ieUICC). A remote SIM provisioning protocol (RSP) is followed to remotely deliver subscription profiles from a provisioning server (such as an enhanced Subscription Manager Data Preparation (SM-DP+) server; hereinafter denoted SM-DP+ for short) to the communication device. Remote SIM provisioning for consumer devices is described in "SGP.22 - RSP Technical Specification", Version 2.4, 28 October 2021, published by GSMA.

A communication device downloads the subscription profile from the SM-DP+. When a mobile network operator (MNO) orders a subscription profile from the SM-DP+, the SM-DP+ will prepare a subscription profile that will be available for download for the communication device. During the profile ordering phase the MNO also performs necessary network provisioning actions.

So called Internet-of-Things (IoT) devices are examples of low-powered communication devices. Provisioning techniques for IoT devices that are based on the remote SIM provisioning for consumer devices are being considered by the industry. According to this consumer variant, user consent is required for subscription profile download and subscription profile management operations. Since an IoT device is typically without user interface, IoT devices might not be able to establish user consent for operations pertaining to subscription profiles. In the considered provisioning techniques for IoT devices, the IoT device is configured to accept profile download triggering operations and profile management operations sent to the IoT device over an established secure communication channel from an authorized (remote) managing entity, without seeking any user confirmation via some local or remote user interface. This allows automated subscription profile handling of a batch, say hundreds or thousands, of IoT devices. The managing entity may, in addition to profile management, also handle device and data management. For example, the managing entity can be a device management server of an enterprise configured to handle management for a large batch of devices or an application on an end-user mobile phone used to manage a few open market IoT devices. We refer to the adapted consumer variant for IoT leveraging the managing entity as the IoT eSIM variant.

There are currently three options, below denoted option 1, option 2, and option 3, defined to provide information to the communication device (and subscriber module, eUICC, iUICC or ieUICC) that a subscription profile is pending for download. All three options apply for the consumer eSIM variant and the IoT eSIM variant.

Option 1: At the subscription profile ordering phase, either the MNO receives (over ES2+) an Activation Code (AC) from the SM-DP+, or the MNO generates an AC from data received from the SM-DP+. The MNO then hands out the AC to the customer, that in case of the IoT eSIM variant provides it to the managing entity. Depending on eSIM variant, the customer or managing entity triggers download of the subscription profile by providing the AC to the communication device that then, based on information from the AC, is enabled to connect to the proper SM-DP+ to download the subscription profile.

Option 2: The communication device is configured with, or at least has access to, a default SM-DP+ address that defines the SM-DP+ to use for download of the subscription profile. For example, at first power-up during commissioning of the communication device, or based some other defined trigger, the communication device connects to the default SM-DP+ to download the subscription profile.

Option 3: At the subscription profile ordering phase, the MNO requests the SM-DP+ to register information about an available subscription profile for a particular communication device at a discovery service (such as a Subscription Manager Discovery Server (SM-DS)). An event is then created at the SM-DS for the particular communication device, instructing the communication device to connect to the SM-DP+ to download the subscription profile. The communication device is configured to contact the SM-DS, for example, at first power-up during commissioning of the communication device, to check for pending subscription profile download events. Upon successful download of the event from the SM-DS, the communication device connects to the SM-DP+ given by the event to download the subscription profile. GSMA has currently specified a root SM-DS, which is common for all communication devices. There may, however, be subsidiary SM-DS servers, and vendor specific discovery services, and thus diverse SM-DS servers.

According to option 2 and option 3 the MNO provides the e/i/ieUICC (hereafter simply eUICC) identifier (EID) of the communication device and the prepared profile package for download is bound to the EID in the SM-DP+. According to option 1 there is no need for the MNO (or SM-DP+) to know the EID at the time of subscription profile ordering. In option 1, the communication device receives, via the AC, a Matching ID (MID) that the communication device presents to the SM-DP+ during download of the subscription profile to identify the correct prepared profile package.

For secure management of IoT devices, secure communication should be established between the IoT device and the managing entity. Such secure communication relies on key material being available at the IoT device and at the managing entity. For example, a pre-shared key or private-public key pairs and certificates might be used by the IoT device and the managing entity.

Memory and/or power constrained IoT devices and IoT devices connecting over Low Power Wide Area (LPWA) networks typically cannot support Hypertext Transfer Protocol Secure (HTTPS) communication with the SM-DP+ as required by the aforementioned specification "SGP.22 - RSP Technical Specification". In some examples, the subscription profile download (and notification handling) for these IoT devices is performed via the managing entity to the SM-DP+, leveraging the secure communication between the IoT device and the managing entity. Further, the managing entity handles the HTTPS communication with the SM-DP+. For these devices, the same is true (i.e. communication is via the managing entity that handles HTTPS) also when an IoT device is interacting with the SM-DS. Less constrained IoT devices that, for example, only lacks (or have a very limited) user interface, are typically capable of communicating directly with an SM-DP+ or SM-DS through the use of HTTPS according to the aforementioned specification "SGP.22 - RSP Technical Specification".

Maintaining connectivity is critical for many IoT devices, and protection is needed against malwares that may try to disable or delete profiles in the eUICC resulting in loss of connectivity and need for re-installation of profiles, or malwares that try to download, install, and enable rogue profiles into the eUICC. One approach here for the eSIM IoT variant is that the managing entity signs using its private key all commands/operations to the eUICC that relates to changing the profile state and the eUICC must verify the signature, using the managing entity public key that has been securely configured in the eUICC, before accepting commands/operations that relates to changing the profile state. The configuration of the managing entity public key into the eUICC may happen at different stages such as eUICC production, device production, module production, and in-field when the device is brought into use.

The combination of subscription profile download via a default SM-DP+ or SM-DS, as in option 2 and option 3 above, and a subscription profile with device management server details including key material (e.g. according to the OMA LwM2M protocol (where OMA LwM2M is short for Open Mobile Alliance Lightweight Machine to Machine)) provides a convenient way for a communication device to, at power-up, download the correct subscription profile and connect to the desired management server (using information and credentials from the downloaded subscription profile). The profile is here assumed to be installed and automatically enabled by the device. To allow this an exception is needed such that automatic enabling of a profile is possible without requiring a signed command/operation to the eUICC from the managing entity.

There is, however, an issue with this approach, in that anyone can order, from any MNO or SM-DP+ that is part of the GSMA ecosystem, any kind of subscription profile for a particular EID. It is possible for an entity that knows the EID of an IoT device to lure the IoT device to use an incorrect, potentially malicious, MNO or SM-DP+ for subscription profile download, and malicious operator / MiTM connectivity, or even - if utilizing the OMA specified possibility to include management server credentials to the profile - make the device connect to a fake device management server. At minimum this kind of activity could be used for DoS attacks.

As will be explained next, this is, however, not an issue when option 1 is used. For IoT devices where download of the subscription profile is triggered according to option 1 and the AC is delivered from the managing entity (e.g. device management server) to the IoT device, the IoT device and the managing entity must already have shared key material in order to establish secure communication to deliver the AC. The secure communication with a trusted managing entity delivering the AC ensures only authorized subscription profiles are delivered. Furthermore, since the IoT device and managing entity already have shared key material in order to establish secure communication, the delivery of device management details including key material via the subscription profile does not make any sense. However, it might not always be possible, feasible, or desired to use option 1.

The presence of malwares affects profile download and installation in IoT devices using any of the three options, also for option 1. A malware can trigger download of a profile from any SM-DP+ as long as some entity has made sure a profile is prepared for download at that SM-DP+. The download information (e.g. AC) of such a non-wanted profile can be pre-configured in the malware or downloaded by the malware from some server. Even if the signed commands/operations are used so that they may prevent enabling of such non-wanted profiles, such profiles can be downloaded to fill the memory of the eUICC such that other authorized profiles cannot not be downloaded.

In view of the above, there is a need for more secure procedures for subscription profile download to a communication device.

### SUMMARY

An object of embodiments herein is to provide secure procedures for subscription profile download to a communication device, where the above issues are avoided, or at least mitigated or reduced.

A key aspect is the addition of authorization of either SM-DS event or profile download operation to the GSMA SGP.22 standard and eSIM IoT variant leveraging the GSMA SGP.22 standard. This ensures the default SM-DP+ and SM-DS options for profile triggering can be used without risk of downloading profiles to IoT devices that are not authorized by the device owner / end-user to IoT devices. This applies when the SGP.22 approach is used as a base for IoT devices and the end-user consent is removed. The authorization is handled in the subscriber module to protect against malwares in the device.

According to a first aspect there is presented a method for subscription profile download. The method is performed by a communication device comprising a subscriber module. The subscriber module is configured with a first authorization secret. The method comprises receiving and providing to the subscriber module, as part of performing a subscription profile download procedure, second authorization information from a subscription management entity. The second authorization information is generated using a second authorization secret. The method comprises the subscriber module verifying the second authorization information against the first authorization secret using a matching criterion. The method comprises downloading the subscription profile only if the second authorization information, according to a matching criterion, matches the first authorization secret.

According to a second aspect there is presented a communication device for subscription profile download. The communication device comprises a subscriber module being configured with a first authorization secret. The the communication device comprises processing circuitry. The communication device and the subscriber module comprise processing circuitry is configured to cause the communication device to receive and provide to the subscriber module, as part of performing a subscription profile download procedure, second authorization information from a subscription management entity. The second authorization information is generated using a second authorization secret. The processing circuitry is configured to cause the communication device to verify using the subscriber module the second authorization information against the first authorization secret using a matching criterion, and to download the subscription profile only if the second authorization information, according to a matching criterion, matches the first authorization secret.

According to a third aspect there is presented a computer program for subscription profile download. The computer program comprises computer program code which, when run on processing circuitry of a communication device and the subscriber module, causes the communication device and subscriber module to perform a method according to the first aspect.

According to a fourth aspect there is presented a method for enabling subscription profile download to a communication device. The method is performed by a subscription management entity. The method comprises obtaining, from a mobile network operator entity or a second subscription management entity, a message for preparing for download of a subscription profile for the communication device. The message comprises a third authorization secret for the communication device. The method comprises providing, as part of performing a subscription profile download procedure, second authorization information to the subscriber module of the communication device. The second authorization information is generated using a second authorization secret. The second authorization secret is derivable, by the subscription management entity, from the third authorization secret.

According to a fifth aspect there is presented a subscription management entity for enabling subscription profile download to a communication device. The subscription management entity comprises processing circuitry. The processing circuitry is configured to cause the subscription management entity to obtain, from a mobile network operator entity or a second subscription management entity, a message for preparing for download of a subscription profile for the communication device. The message comprises a third authorization secret for the communication device. The processing circuitry is configured to cause the subscription management entity to provide, as part of performing a subscription profile download procedure, second authorization information to the subscriber module of the communication device. The second authorization information is generated using a second authorization secret. The second authorization secret is derivable, by the subscription management entity, from the third authorization secret.

According to a sixth aspect there is presented a computer program for enabling subscription profile download to a communication device. The computer program comprises computer program code which, when run on processing circuitry of a subscription management entity, causes the subscription management entity to perform a method according to the fourth aspect.

According to a seventh aspect there is presented a computer program product comprising a computer program according to at least one of the third aspect, and the sixth aspect and a computer readable storage medium on which the computer program is stored. The computer readable storage medium can be a non-transitory computer readable storage medium.

Advantageously, these aspects provide a secure procedure for subscription profile download to the communication device, where the above issues are avoided.

Advantageously, these aspects provide a convenient and secure way for the communication device to, at power-up, connect to the desired management server and download the correct subscription profile.

Advantageously, these aspects further protect against malwares trying to change profile states or downloading, installing, and enabling rogue profiles. The proposed solution allows secure profile download via SM-DS and default SM-DP+ during the whole life-cycle of the IoT device, also when a managing entity is known and configured into the subscriber module.

The embodiments using authorization secrets work also for ensuring that only authorized profiles are downloaded also for option 1 and prevents malware from downloading and installing non-wanted profiles.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic diagram illustrating a communication system according to embodiments;
Figs. 2, 3, 4, and 5 are flowcharts of methods according to embodiments;
Figs. 6 and 7 are signalling diagrams according to embodiments;
Fig. 8 is a schematic diagram showing functional units of a communication device according to an embodiment;
Fig. 9 is a schematic diagram showing functional modules of a communication device according to an embodiment;
Fig. 10 is a schematic diagram showing functional units of a subscription management entity according to an embodiment;
Fig. 11 is a schematic diagram showing functional modules of a subscription management entity according to an embodiment;
Fig. 12 is a schematic diagram showing functional units of a mobile network operator entity according to an embodiment;
Fig. 13 is a schematic diagram showing functional modules of a mobile network operator entity according to an embodiment; and
Fig. 14 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

The wording that a certain data item or piece of information is obtained by a first device should be construed as that data item or piece of information being retrieved, fetched, received, or otherwise made available to the first device. For example, the data item or piece of information might either be pushed to the first device from a second device or pulled by the first device from a second device. Further, in order for the first device to obtain the data item or piece of information, the first device might be configured to perform a series of operations, possibly including interaction with the second device. Such operations, or interactions, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the first device.

The wording that a certain data item or piece of information is provided by a first device to a second device should be construed as that data item or piece of information being sent or otherwise made available to the second device by the first device. For example, the data item or piece of information might either be pushed to the second device from the first device or pulled by the second device from the second device. Further, in order for the first device to provide the data item or piece of information to the second device, the first device and the second device might be configured to perform a series of operations in order to interact with each other. Such operations, or interaction, might involve a message exchange comprising any of a request message for the data item or piece of information, a response message comprising the data item or piece of information, and an acknowledge message of the data item or piece of information. The request message might be omitted if the data item or piece of information is neither explicitly nor implicitly requested by the second device.

Novel aspects of embodiments of the invention include that the authorization secret is handled by the subscriber module instead of by the communication device's software. This includes the following advantages and features:
- After the manufacturing phase, the authorization secret is never revealed in plaintext outside of the eUICC in the device.
- The authorization secret must either:
   ∘ be protected end-to-end when delivered from the SM-DS / SM-DP+ to the subscriber module, or
   ∘ be used in cryptographic operations to either integrity protect or encrypt data exchanged between the SM-DS / SM-DP+ and the subscriber module such that the subscriber module can be convinced on the knowledge of the correct authorization secret at the SM-DS / SM-DP+.
- In-field provisioning of a new authorization secret in the subscriber module is secured between the subscriber module and managing entity such that the authorization secret is not revealed.
- The event record information provided by the SM-DS is signed by the SM-DS such that the subscriber module can securely verify SM-DP+ information and Matching Id to be used for the profile download. Upon successful verification, SM-DP+ information and Matching Id is stored in the subscriber module and is used during the download to make sure the profile download is authorized.

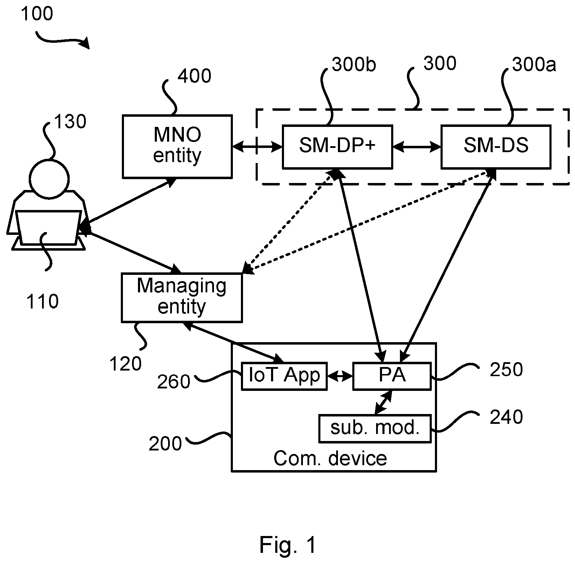

Fig. 1 is a schematic diagram illustrating a communication system 100 where embodiments presented herein can be applied. The communication system 100 comprises a communication device 200, an MNO entity 400, a subscription management entity 300, a managing entity 120, and an end-user device 110 for allowing a device-owner or end-user 130 to interact with e.g., the MNO entity 400 and the managing entity 120. The end-user device 110 might be user equipment, laptop computer, tablet computer, smartphone, or the like.

The communication device 200 is the device to which a subscription profile is to be downloaded. The communication device 200 comprises a subscriber module (sub. mod.) 240, such as an iUICC or eUICC or ieUICC, supporting remote provisioning of subscription profiles according to the GSMA consumer variant. The subscriber module holds credentials for secure interaction with both provisioning servers (such as an SM-DP+ 300b), and discovery servers (such as an SM-DS 300a). The communication device 200 might be an IoT device. In such cases the communication device 200 might be managed by a managing entity 120 that, for example, can be a device management server of an enterprise configured to handle management for a large batch of IoT devices or an application on an end-user device, such as a user equipment, used to manage a few IoT devices. The managing entity 120 might also handle subscription profile download triggering (by providing an AC as in option 1) and profiles management operations such as enablement, disablement, and deletion of subscription profiles.

The communication device 200 comprises a Profile Assistant (PA) 250 that is configured to assist during download of subscription profiles and profile management operations. The PA 250 interacts with the subscriber module 240. The PA 250 also interacts with the SM-DP+ 300b for subscription profile download and notification handling and with the managing entity 120 for profile management operations. The PA 250 may be configured to interact with the SM-DS 300a to check for pending subscription profile download events. In case of a constrained IoT device the communication with the SM-DP+ or SM-DS may be via the managing entity as previously described. This is shown in Fig. 1 using dotted lines.

The communication device 200 comprises an IoT application 260 that handles secure communication with the managing entity 120. The PA 250 might thus communicate with entities external to the communication device 200 via the IoT application 260. Secure communication might involve encryption, integrity protection, mutual authentication, resource authorization, etc. Secure communication might rely on key material being available at the communication device 200 and the managing entity 120. For example, a pre-shared key or private-public key pairs and certificates might be used by the communication device 200 and the managing entity 120.

There are many different ways of establishing the key material for secure communication between the managing entity 120 and the communication device 200. For example, the communication device 200 might during manufacturing be preconfigured with credentials and all necessary information for establishing secure communication. Alternatively, the communication device 200 is configured to perform a bootstrap process at first power-up during which ownership of the communication device 200 is established and credentials for secure communication with the managing entity 120 are established. For example, the communication device 200 may be equipped with device credentials and necessary information to secure communicate with a bootstrap server where the communication device 200 may download address and necessary credentials to securely communicate with the managing entity 120. OMASpecWorks LwM2M is an example of a protocol supporting such a bootstrap process.

The download of the credentials and necessary information to securely communicate with the managing entity 120 may be linked with the subscription profile. For example, the credentials and necessary information might be contained in a subscription profile that is remotely downloaded to the communication device 200 using any of option 1, option 2, or option 3 described above. It may be either the credentials and information of the managing entity 120 itself or the credentials and information of a bootstrap server where the communication device 200 can download the credentials and information for secure communication with the managing entity. For example, the OMASpecWorks LwM2M protocol specification describes how to store information and credentials in an iUICC/eUICC/ieUICC and, in the case of eUICC, iUICC, or ieUICC, the subscription profile elements for file management may be used to include the information and credentials into the subscription profile that is downloaded to the communication device 200. Another option for providing credentials linked to the subscription profile is IoT SAFE (SIM Applet For Secure End-2-End Communication). Here an IoT SAFE applet may be downloaded as part of the profile to the communication device 200 and where, upon successful installation of the subscription profile, the SIM Over-The-Air (OTA) mechanism is used to download credentials and information to the communication device 200 to securely communicate with the managing entity 120. In some examples, the credentials and information for use with IoT SAFE may also be downloaded via the subscription profile.

The MNO entity 400 might represent a (Communications) Service Provider ((C)SP) that provides cellular connectivity for the communication device 200 for remote subscription profile download. The MNO entity 400 also receives orders for subscription profiles for the communication device 200 from the device owner or end-user 130, e.g. via the end-user device 110.

The subscription management entity 300 might implement the functionality of an SM-DP+ 300b and/or an SM-DS 300a. The SM-DP+ 300b handles subscription profile download to devices (such as IoT devices and consumer device) according to the aforementioned specification "SGP.22 - RSP Technical Specification". The SM-DP+ 300b is either operated by the MNO entity 400 providing the subscription profiles to be downloaded or by a third party trusted by the MNO entity 400. The SM-DS 300a provides a discovery service for use by devices (such as IoT devices and consumer devices) according to the aforementioned specification "SGP.22 - RSP Technical Specification".

The managing entity 120 manages the communication device 200 on behalf of the device owner / end-user 130. The managing entity 120 handles device management operations and possibly also data management operations. In addition, the managing entity 120 also handles profile management. The device owner / end-user 130 may interact, for example via the end-user device 110, with the managing entity 120 to configure the managing entity 120 with management operations. In some examples, the managing entity 120 is an application running on the end-user device 110. In this case the end-user device 110 and managing entity 120 are implemented in the same physical device.

As disclosed above there is a need for more secure procedures for subscription profile download to the communication device 200.

The embodiments disclosed herein relate to mechanisms for subscription profile download to a communication device 200 and for enabling the subscription profile download to the communication device 200. In order to obtain such mechanisms there is provided a communication device 200 with a subscriber module 240, a method performed by the communication device 200, a computer program product comprising code, for example in the form of a computer program, that when run on processing circuitry of the communication device 200, causes the communication device 200 to perform the method. In order to obtain such mechanisms there is further provided a subscription management entity 300, a method performed by the subscription management entity 300, and a computer program product comprising code, for example in the form of a computer program, that when run on processing circuitry of the subscription management entity 300, causes the subscription management entity 300 to perform the method.

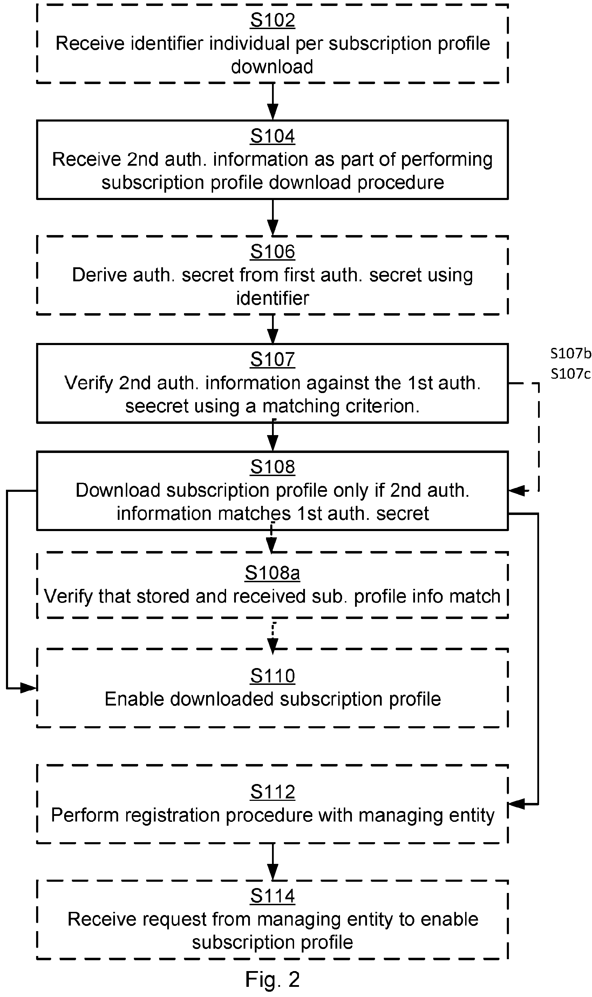

Reference is now made to Fig. 2 illustrating a method for subscription profile download as performed by the communication device 200 comprising a subscriber module 240, e.g. eUICC according to an embodiment. The subscriber module 240 is configured with a first authorization secret.

S104: The communication device 200 receives and provides to the subscriber module 240, as part of performing a subscription profile download procedure, second authorization information from the subscription management entity 300. The second authorization information has been generated using a second authorization secret.

S107: The subscriber module 240 of the communication device 200 verifies the second authorization information against the first authorization secret using a matching criterion.

S108: The communication device 200 downloads the subscription profile only if the second authorization information, according to the matching criterion, matches the first authorization secret.

Embodiments relating to further details of subscription profile download as performed by the communication device 200 will now be disclosed.

Aspects of the first authorization secret will now be disclosed. There may be different ways for the subscriber module 240 of the communication device 200 to be configured with the first authorization secret. Different embodiments relating thereto will now be described in turn. In some embodiments, the first authorization secret is preconfigured in the subscriber module 240 of the communication device 200. In some embodiments, the first authorization secret is obtained by the subscriber module 240 of the communication device 200 from a managing entity 120. In some embodiments, the first authorization secret is generated by the subscriber module 240 of the communication device 200. In some embodiments, the communication device 200 has a subscriber module identifier. The first authorization secret might then be derived from a batch authorization secret using the subscriber module identifier. In some non-limiting examples, the subscriber module identifier comprises an EID.

In some aspects, a profile download individual authorization secret is derived from the first authorization secret. The derived authorization secret might then be used during the matching. In particular, in some embodiments, the communication device 200 is configured to perform (optional) action S106:
S106 (optional): The subscriber module 240 of the communication device 200 derives an authorization secret from the first authorization secret using an identifier individual per subscription profile download. Then, in accordance with the matching criterion, the first authorization secret is replaced by the derived authorization secret in the matching.

In some aspects, the identifier used in action S 106 is received from the subscription management entity 300. Therefore, in some embodiments, the communication device 200 is configured to perform (optional) action S102:
S102: The communication device 200 receives, from the subscription management entity 300, the identifier individual per subscription profile download.

In some embodiments, the identifier individual per subscription profile download comprises a Matching ID or a transaction ID.

Aspects of the matching criterion will now be disclosed.

In some examples, the second authorization secret should, according to the matching criterion, be equal to the first authorization secret. In some embodiments, the second authorization information is identical to the second authorization secret. Then, in accordance with the matching criterion, the second authorization information matches the first authorization secret only when the second authorization secret is identical to the first authorization secret.

In some examples, the second authorization secret is used to compute a message authentication code (MAC) on some piece of data and as verification the subscriber module of the communication device 200 computes the MAC of the same piece of data using the first authorization secret and then checks that the two MACs match. In some embodiments, the second authorization information is a second MAC computed by the subscription management entity 300 using the second authorization secret and a piece of data. The piece of data is received by the communication device 200 from the subscription management entity 300 and provided to the subscriber module 240. The subscriber module of the communication device 200 might then compute a first MAC on the piece of data using the first authorization secret as key. Then, in accordance with the matching criterion, the second authorization information matches the first authorization secret only when the second MAC is identical to the first MAC.

In some examples, the second authorization secret is used as key to encrypt some piece of data, and the first authorization secret is used to decrypt the thus encrypted piece of data. In some embodiments, the second authorization information is data as encrypted by the subscription management entity 300 using the second authorization secret as key. The first authorization secret is used by the subscriber module 240 of the communication device 200 for decrypting the second authorization information. Then, in accordance with the matching criterion, the second authorization information matches the first authorization secret only when the subscriber module 240 of the communication device 200 is able to decode the piece of data and verify correctness of the data as decrypted.

In some examples, the first authorization secret is used as key to encrypt some piece of data, and the second authorization secret is used to decrypt the thus encrypted piece of data. The subscription management entity 300 then needs to prove that it is able to decrypt the thus encrypted piece of data. In some embodiments, the communication device 200, to the subscription management entity 300, sends data as encrypted by the subscriber module 240 using the first authorization secret as key. The second authorization secret is used by the subscription management entity 300 for decrypting the piece of data. The second authorization information equals the decrypted data. Then, in accordance with the matching criterion, the second authorization information matches the first authorization secret only when the subscriber module 240 of the communication device 200 is able to verify that the subscription management entity 300 has successfully decrypted the piece of data.

In some examples, the first authorization secret is only valid within a time window. In some embodiments, the first authorization secret has a limited validity in time. The validity in time is bounded by a time window. Then, in accordance with the matching criterion, the second authorization secret fails to match the first authorization secret when it is received outside the time window.

In some examples, the second authorization secret is delivered encrypted from the subscription management entity 300. In some embodiments, the second authorization information equals the second authorization secret. The second authorization secret might then be received encrypted from the subscription management entity 300 for decryption by the subscriber module 240.

Aspects relating to different examples of subscription management entities 300 will now be disclosed.

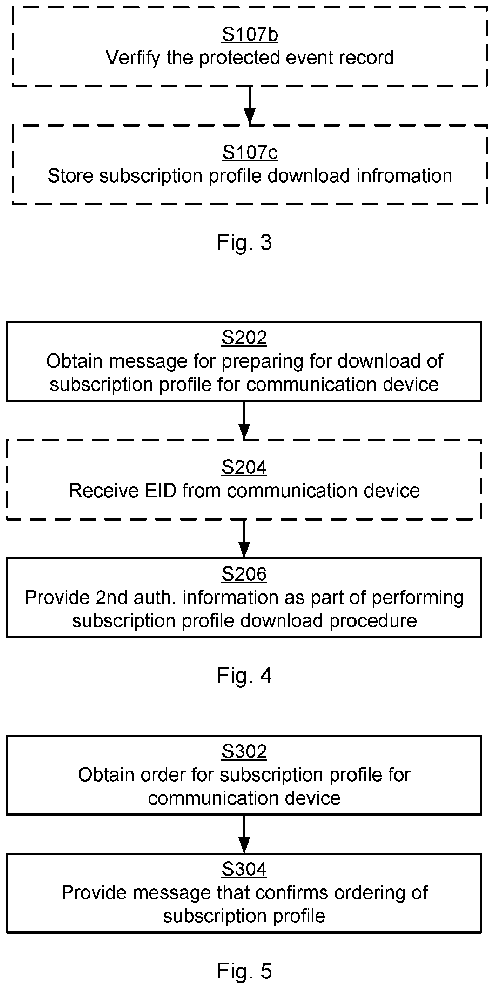

Reference is now made to Fig. 2 together with Fig. 3 illustrating some optional steps S 107b and S 107c. In some embodiments, the subscription management entity 300 is an SM-DS entity 300a. The second authorization information might then be received together with an event record providing subscription profile download information comprising SM-DP+ information and Matching ID, and wherein the event record is protected by the SM-DS. In some embodiments, the communication device 200 is then configured to perform the following (optional) actions:
S 107b: The subscriber module 240 of the communication device 200 verifies the protected event record.
S 107c: The subscriber module 240 of the communication device 200 stores, upon successful verification, the subscription profile download information.
S 108a: The subscriber module 240 of the communication device 200 verifies, while interacting with the SM-DP+ during the download of the profile, that the stored subscription profile download information matches received information about the SM-DP+ 300b and Matching ID to be used.

In some examples, the event record is protected using the MAC calculated by the SM-DS 300a using the second authorization secret and the subscriber module 240 of the communication device 200 verifies the protected event record by computing the MAC on the received event record and then checking that the two MACs match.

In some examples, the event record is protected using a digital signature calculated by the SM-DS 300a using the same key pair as was used during the SM-DS authentication and the signature including the transaction ID such that the signed event record is linked to the SM-DS authentication. The subscriber module 240 of the communication device 200 verifies the protected event record by verifying the SM-DS signature using the SM-DS public key obtained during the SM-DS authentication.

Further, the identifier individual per subscription profile download might then be received from the SM-DS entity 300a.

In other embodiments, the subscription management entity 300 is an SM-DP+ entity 300b. The second authorization information might then by the communication device 200 be received in a subscription profile download message from the subscription management entity 300. Further, the identifier individual per subscription profile download might by the communication device 200 be received from an SM-DS entity 300a.

Aspects of possible actions taken by the communication device 200 upon having downloaded the subscription profile in action S 108 will now be disclosed.

In some aspects, the communication device 200 enables the downloaded subscription profile. That is, in some aspects the communication device 200 is configured to perform (optional) action S110:
S110: The subscriber module 240 of the communication device 200 enables the subscription profile as downloaded.

In other aspects, the downloaded profile is enabled only when the communication device 200 has registered with the managing entity 120. That is, in some aspects, the communication device 200 is configured to perform (optional) action S112 and (optional) action S114:
S112: The communication device 200 performs a registration procedure with the managing entity 120 for registering with the managing entity 120.
S114: The communication device 200 receives a request from the managing entity 120 to enable the subscription profile as downloaded.

The communication device 200 might then enable the subscription profile as downloaded, as in action S110.

In some embodiments, performing a registration procedure with the managing entity 120 comprises establishing secure communication with the managing entity 120. The credentials for establishing secure communication might be obtained from the subscription profile as downloaded.

Reference is now made to Fig. 4 illustrating a method for enabling subscription profile download to a communication device 200 as performed by the subscription management entity 300 according to an embodiment.

S202: The subscription management entity 300 obtains, from the MNO entity 400 or a second subscription management entity 300, a message for preparing for download of a subscription profile for the communication device 200. The message comprises a third authorization secret for the communication device 200.

S206: The subscription management entity 300 provides, as part of performing a subscription profile download procedure, second authorization information to the subscriber module 240 of the communication device 200. The second authorization information is by the subscription management entity 300 generated using a second authorization secret. The second authorization secret is derivable, by the subscription management entity 300, from the third authorization secret.

Embodiments relating to further details of enabling subscription profile download to a communication device 200 as performed by the subscription management entity 300 will now be disclosed.

In some embodiments, the second authorization information equals the second authorization secret. The second authorization secret might then be encrypted by the subscription management entity 300 before is provided to the communication device 200 and the subscriber module 240.

In some aspects, the subscription management entity 300 authenticates the communication device 200 before delivering the second authorization secret to the communication device 200. In some embodiments, the message comprises an EID of the communication device 200, particularly of the subscriber module, for which the subscription profile is intended. The subscription management entity 300 might then be configured to perform (optional) action S204:
The subscription management entity 300 receives, from the communication device 200, the EID.

The second authorization information might then be provided to the communication device 200 when the subscription management entity 300 has verified that the EID received from the communication device 200 matches and EID of the communication device 200 as received from the MNO entity 400.

As disclosed above, there might be different examples of subscription management entities 300.

In some embodiments, the subscription management entity 300 is an SM-DS entity 300a. The second subscription management entity 300 is then a SM-DP+ entity 300b. The message in action S202 is then a request from the SM-DP+ entity 300b to register an event containing subscription profile download information at the SM-DS entity 300a. Further, the second authorization information might then be provided together with an event record providing subscription profile download information, wherein the event record is protected by the SM-DS entity 300a using a MAC and/or a digital signature.

In some embodiments, the subscription management entity 300 is a SM-DP+ entity 300b. The message in action S202 is then from the MNO entity 400 and confirms ordering of the subscription profile for the communication device 200. Further, the second authorization information might then be provided in a subscription profile download message from the SM-DP+ entity 300b to the communication device 200.

In some embodiments, the third authorization secret is identical to the second authorization secret. In other embodiments, the message in action S202 comprises a subscriber module identifier of the communication device 200 for which the subscription profile is intended. The third authorization secret might then be a batch authorization secret. The second authorization secret might then be derived from the batch authorization secret using the subscriber module identifier. In yet other embodiments, the second authorization secret is derived from the third authorization secret using an identifier individual per subscription profile download. The identifier individual per subscription profile download might then be generated by the subscription management entity 300, or the message in action S202 comprises the identifier individual per subscription profile download.

Reference is now made to Fig. 5 illustrating a method for enabling subscription profile download to a communication device 200 as performed by the MNO entity 400 according to an illustrative example.

S302: The MNO entity 400 obtains an order for a subscription profile for the communication device 200. The order is accompanied by a fourth authorization secret for the communication device 200.

S304: The MNO entity 400 provides, to the subscription management entity 300, a message that confirms ordering of the subscription profile for the communication device 200. The message comprises a third authorization secret. The third authorization secret is derivable, by the MNO entity 400, from the fourth authorization secret.

Further details of enabling subscription profile download to a communication device 200 as performed by the MNO entity 400 will now be disclosed.

Aspects of the third authorization secret and the fourth authorization secret will now be disclosed.

In some embodiments, the fourth authorization secret is identical to the third authorization secret.

In some embodiments, the order comprises a subscriber module identifier of the communication device 200. The fourth authorization secret might then be a batch authorization secret. The third authorization secret might then be derived from the batch authorization secret using the subscriber module identifier.

In some embodiments, the third authorization secret is derived from the fourth authorization secret using an identifier individual per subscription profile download. The identifier individual per subscription profile download might then be generated by the MNO entity 400.

In some embodiments, each of the first authorization secret, the second authorization secret, the third authorization secret, and the fourth authorization secret is composed of a respective string of alphanumeric characters.

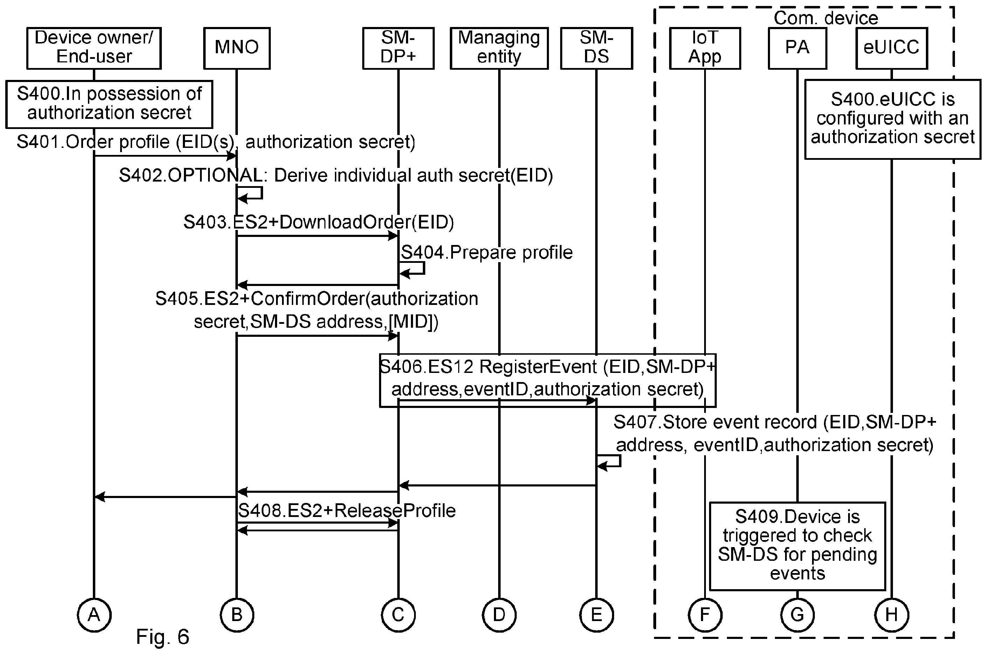

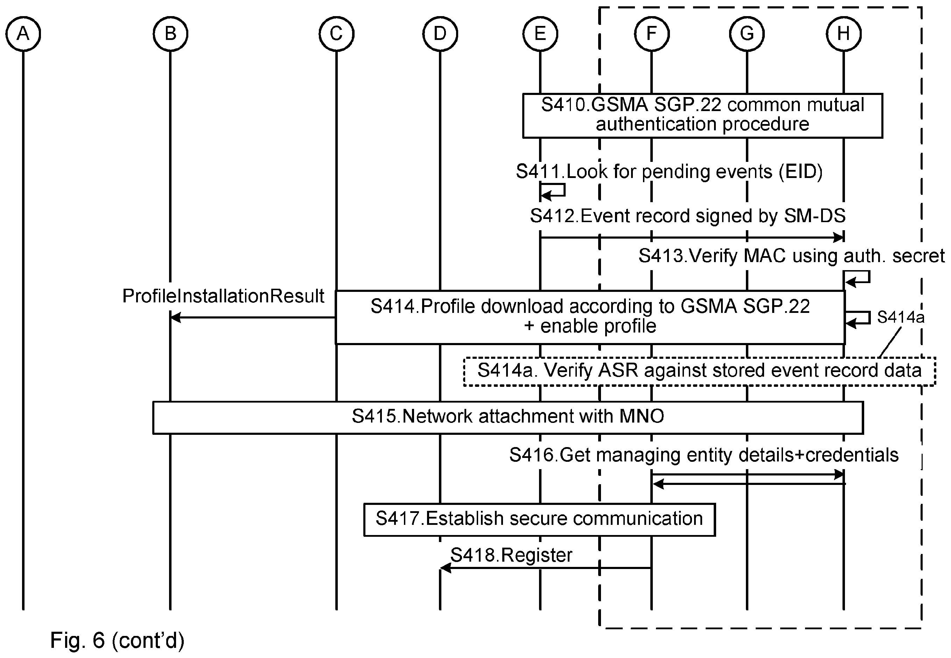

A first particular embodiment for subscription profile download to a communication device 200 and for enabling the subscription profile download to the communication device 200 based on at least some of the above disclosed embodiments will now be disclosed in detail with reference to the signalling diagram of Fig. 6.

This embodiment is based on that the subscriber module 240 of the communication device 200 is configured with an authorization secret that is used by the communication device 200 for authorizing the SM-DS 300a. The authorization secret is either a permanent authorization secret or an on-request generated authorization secret, or other type of authorization secret. For example, the authorization secret could have been configured during subscriber module 240 (e.g. eUICC) manufacturing, or the subscriber module 240 can be triggered to generate a secret and provide it to some trusted entity. Such a trusted entity may for example be a managing entity whose public key has been configured to the subscriber module 240, or some manufacturing server. In the first case the secret is encrypted such that only the managing entity can decrypt it and preventing malware from obtaining it, and in the latter case the subscriber module 240 is for example not yet fully locked such that the secret can be output in plaintext before fully locking the subscriber module 240 (in manufacturing we assume malwares are not present). In case the authorization secret is permanent, it could be printed on a label in the communication device 200 packaging or inside the packaging for added security. The authorization secret may also be pushed to the subscriber module 240 of the communication device 200 via the managing entity 120, in which case the secret is encrypted leveraging the public key of the managing entity being registered in the subscriber module 240.

Action S400: The subscriber module eUICC of the communication device 200 is configured with an authorization secret and the device owner/ end-user 130 has obtained the authorization secret either by interacting with the subscriber module 240 of the communication device 200, e.g. using the managing entity, or by reading the authorization secret from the communication device 200 packaging.

Action S401: The device owner / end-user 130, for example via the end-user device 110, orders a profile for the communication device 200 from an MNO entity 400. The authorization secret and the EID are provided to the MNO entity 400.

Action S402: (optional) In case there is a batch of communication devices 200 for which subscription profiles have been ordered, the MNO entity 400 computes an individual authorization secret for the communication device 200 from a batch authorization secret. If the batch of communication devices 200 share the same authorization secret, this authorization secret can also be used.

Action S403: The MNO entity 400 provides a download order command, for example by providing an ES2+ DownloadOrder message, to the SM-DP+ 300b to initiate subscription profile preparation.

Action S404: The SM-DP+ 300b prepares the subscription profile and links it to the EID of the communication device 200 obtained from the MNO entity 400.

Action S405: The MNO entity 400 confirms the order, for example by providing an ES2+ Confirm Order message, to the SM-DP+ 300b to confirm the subscription profile download. The Confirm Order message comprises the SM-DS 300a address to which the SM-DS 300a event shall be registered and might comprise a Matching ID (MID) generated by the MNO entity 400. The message comprises the authorization secret.

Action S406: The SM-DP+ 300b registers, for example by sending an ES12 RegisterEvent message to the SM-DS 300a, a subscription profile download event at the SM-DS 300a specified in the Confirm Order command. The RegisterEvent command comprises an eventID that is equal to the MID. If no MID was provided by the MNO entity 400 in action S405 the SM-DP+ 300b generates the MID. The message comprises the authorization secret along with the EID, SM-DP+ 300b address, and eventID.

Action S407: The SM-DS 300a stores an event record comprising the authorization secret, EID, SM-DP+ 300b address, and eventID.

Action S408: The MNO entity 400 releases the subscription profile for download, for example by sending an ES2+ ReleaseProfile message to the SM-DP+ 300b.

Action S409: The communication device 200 is triggered to check with the SM-DS 300a for any pending events. This may for example be triggered at first power-up at commissioning of the communication device 200. The address of the SM-DS 300a is configured in the communication device 200.

Action S410: Mutual authentication procedure is performed between the communication device 200 and the SM-DS 300a such that the communication device 200 and the SM-DS 300a are mutually authenticated. Thereafter the SM-DS 300a obtains the EID of the eUICC of the communication device 200 from the eUICC certificate.

Action S411: Upon success authentication, the SM-DS 300a checks for pending events for the obtained EID.

Action S412: An event record for the provided EID is securely delivered to the communication device 200 and further to the subscriber module eUICC. The event record data is signed by the SM-DS using the same key pair as was used to sign during the authentication in step S410. The signature includes the transaction ID in order to link it to the ongoing session with the SM-DS. The SM-DS also computes a Message Authentication Code (MAC) on the event record data using the authorization secret as key. The Event record, including the signature and the MAC, is provided to the device and further to the subscriber module eUICC.

Action S413: The subscriber module eUICC of the communication device 200 verifies the SM-DS knowledge of the authorization secret by verifying the MAC on the event record data, and also verifies the SM-DS signature on the event record data. A successful verification ensures that the event is a legitimate event originating from the device owner / end-user 130, and also ensures that the SM-DP+ data and Matching Id of the event record needed for the profile download has not been tampered with. The subscriber module eUICC stores the SM-DP+ data and Matching Id as part of its internal session data for use during the profile download, installation, and enabling. In the internal data it is also recorded that the profile may be automatically enabled without requiring a signed command/operation by a managing entity in order to enable the profile.

Action S414: In case of successful verification of the MAC and signature in action S413, subscription profile download is triggered by the PA. The eventID obtained in action S412 is used as MID.

Action S414a: During profile download, in particular during the Authentication of the SM-DP+ during the common mutual authentication, the subscriber module eUICC verifies that the SM-DP+ data (SM-DP+ address and/or SM-DP+ OID) and the Matching Id of the internal session data matches the data provided in the AuthenticationServerRequest (ASR) before signing the AuthenticationServerResponse. In this way the subscriber module eUICC ensures that the correct profile is downloaded, i.e. the one linked to the authorization secret in Action S412. Upon successful installation the subscriber module eUICC updates its internal session data such that the Integrated Circuit Card ID, ICCID, of the downloaded profile is marked as allowed to be automatically enabled. Upon successful profile download, the PA requests the subscriber module eUICC to enable the profile. The request includes the ICCID of the profile that the PA obtained from the profile metadata. The subscriber module eUICC verifies (step S414a) that automatic enabling is allowed for the particular ICCID before enabling the profile.

Action S415: The communication device 200 connects to the network as given by the subscription profile.

Action S416: The IoT application 260 in the communication device 200 obtains managing entity details (e.g. address) and credentials for establishing secure communication. For example, this information can be read from the eUICC file system using application protocol data unit (APDU) commands, or information is obtained from an IoT SAFE (SIM Applet For Secure End-2-End Communication) applet and where the IoT SAFE and its credentials is also involved in establishing the secure communication in action S417.

Action S417: Secure communication is established between the IoT application 260 of the communication device 200 and the managing entity 120 using credentials and information obtained in action S416, possibly with the use of the IoT SAFE applet.

Action S418: The communication device 200 registers with the managing entity 120.

The SM-DS 300a address configured in the communication device 200 is typically the address of the root SM-DS 300a setup up by the GSMA. The SM-DP+ 300b might not be directly connected to the root SM-DS 300a, but to one or more another SM-DS 300a, called alternate SM-DS 300a, that in turn is connected to the root SM-DS 300a. In this case the alternate SM-DS 300a needs to register, at the root SM-DS 300a, an event record that the communication device 200 can download and that triggers the communication device 200 to connect to the alternate SM-DS 300a to download the event record. In this case the authorization secret might be forwarded from the alternate SM-DS 300a to the root SM-DS 300a for use also in authorization of the event record downloaded from the root SM-DS 300a.

In the flow above we used both digital signatures and MAC to sign the event record. It can be enough by using only a MAC. Alternatively, a digital signature on the complete event record may be used, and a MAC is then only computed on parts of the event record, e.g. the event ID.

Alternatively, the authorization secret may be used as an encryption key used to encrypt some piece of data, such as the event record or parts of the event record, before sending the encrypted piece of data to the communication device 200 in action S412. In this case the subscriber module eUICC decrypts the event record using the authorization secret and verifies the event record by verifying the SM-DS signature. Upon successful verification, , the subscriber module eUICC concludes that the SM-DS 300a is in possession of the correct authorization secret, stores the internal session data, and returns the event record to the PA.

As an alternative, the subscriber module eUICC may instead encrypt, using the authorization secret, some piece of data that is sent to the SM-DS 300a prior to action S412. The SM-DS 300a then needs to be able to successfully decrypt this encrypted piece of data for the event record download in action S412 to be completed. For example, the eUICCChallenge, as part of the common mutual authentication procedure, in action S410 could be encrypted by the subscriber module eUICC. The SM-DS 300a must then be able to correctly decrypt the encrypted challenge in order to successfully complete the mutual authentication procedure.

Although the MNO entity 400, the SM-DP+ 300b, and the SM-DS 300a are trusted entities, in case the authorization secret is permanent, it might be desirable to minimize the exposure of the authorization secret. If the MNO entity 400 generates a MID for inclusion in action S405, the MNO entity 400 may then derive an authorization secret individual per each subscription profile download from the permanent authorization secret and the MID, for example as the hash of the concatenation of the authorization secret and the MID. It is then this authorization secret (individual per subscription profile download) that is forwarded to the SM-DP+ 300b in action S405 and used throughout the rest of the procedure. The subscriber module eUICC of the communication device 200 will then in action S413 first derive the authorization secret individual per subscription profile download from the internally stored authorization secret and received eventID (which is equal to the MID) and then verify the authorization secret. If the MNO entity 400 does not generate a MID for inclusion in action S405, the SM-DP+ 300b may, instead of the MNO entity 400, compute the authorization secret individual per subscription profile download. To minimize the exposure of the authorization secret, the MNO entity 400 might generate the MID and derive the authorization secret individual per subscription profile download.

For authenticity, it is possible to concatenate the authorization secret with a digital signature by the subscriber module 240 eUICC private key (and possibly subscriber module eUICC certificate), which would make it possible for any entity in possession of the subscriber module eUICC public certificate to verify the signature to ascertain that the authorization secret truly originates from the subscriber module eUICC with the given EID. In this way, e.g. the SM-DP+ 300b or SM-DS 300a could verify that the authorization secret is truly linked to the subscriber module eUICC (and EID), at the latest when the communication device 200 requests the event or subscription profile and provides its certificate for the authentication.

One way for the subscriber module 240 of the communication device 200 to prove to the SM-DP+ 300b and/or the SM-DS 300a that it is in possession of the authorization secret is for the subscriber module eUICC to include the authorization secret when signing some protocol data such as eUICCSigned1. The SM-DS/SM-DP+ can then verify that the eUICC is in possession of the authorization secret. Note that this method works fine for SM-DP+ when using the individual authorization secret per profile since the Matching Id is known but does not work with SM-DS where the Matching Id is not yet known.

In case of subscription profile ordering for a whole batch of communication devices 200, a permanent batch authorization secret may be used from which the individual permanent authorization secret of each communication device 200 is derived using the EID. At manufacturing of the communication devices 200, or the manufacturing of subscriber modules 240 for use in the communication devices 200, a permanent batch authorization secret is generated. Individual authorization secrets are derived from the EID and the batch authorization secret, for example by computing the SHA-256 hash of the concatenation of the batch authorization secret and the EID of the communication device 200. The subscriber module 240 of each communication device 200 of the batch is configured with its individual authorization secret. The batch authorization secret is delivered to the device owner / end-user 130, for example via the end-user device 110 or by any other means, along with the batch of communication devices 200.

When ordering subscription profiles for the batch of communication devices 200 in action S401, the batch authorization secret is provided to the MNO entity 400. In case of subscription profile ordering per communication device 200 in the batch, the MNO entity 400 first computes the individual authorization secret in action S402 and then continues as disclosed above. Each action is repeated for each communication device 200 in the batch. In case the interaction between the MNO entity 400 and the SM-DP+ 300b is adapted to handle batches of communication devices 200, action S402 might be skipped whilst actions S403 to S405 are performed once for the whole batch, and the authorization secret in action S405 is the batch authorization secret. After receiving the batch authorization secret the SM-DP+ 300b then computes the individual authorization secrets and provide them to the SM-DS 300a in the event registration, which is performed once per communication device 200.

The use of batch authorization secrets (including derivation of communication device 200 individual authorization secrets) may be combined with the derivation of authorization secrets individual per subscription profile download described above. The derivation of the authorization secret individual per subscription profile is then derived from the communication device 200 individual authorization secret.

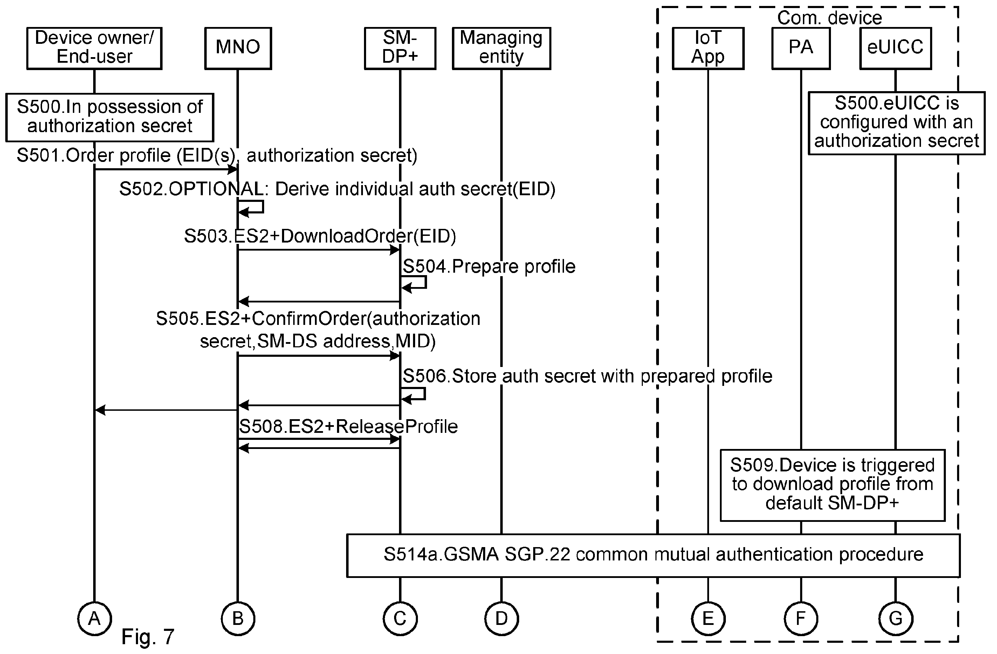

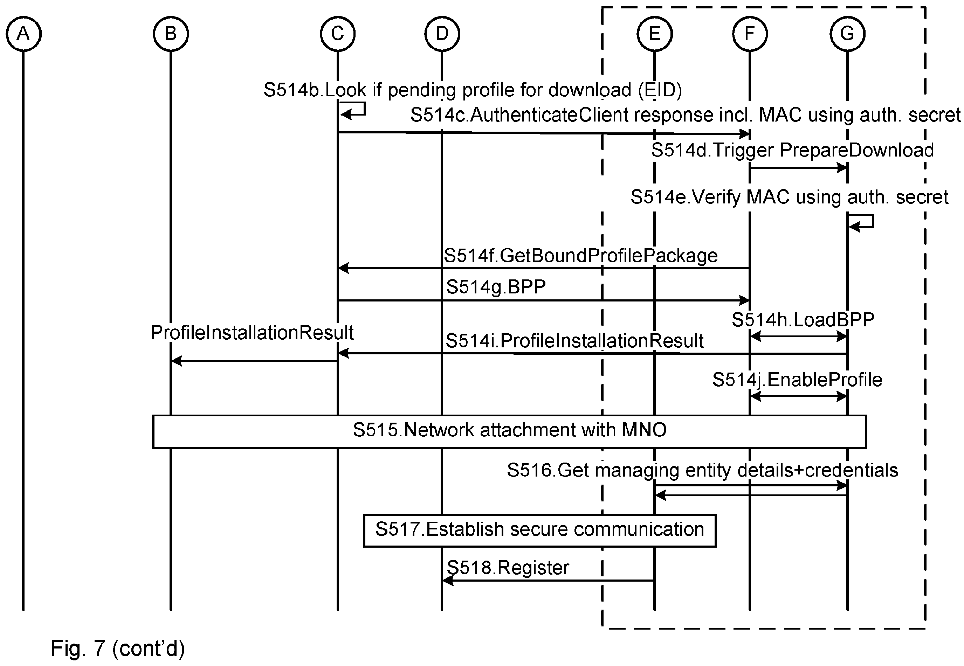

A second particular embodiment for subscription profile download to a communication device 200 and for enabling the subscription profile download to the communication device 200 based on at least some of the above disclosed embodiments will now be disclosed in detail with reference to the signalling diagram of **Fig. 7****.**

The second embodiment concerns subscription profile download authorization where the SM-DP+ 300b proves the knowledge of the authorization secret to the subscriber module eUICC of the communication device 200. In Fig. 7 subscription profile download via a default SM-DP+ 300b address is performed.

Action S500: The subscriber module eUICC of the communication device 200 is configured with an authorization secret and the device owner / end-user 130 has obtained the authorization secret either by interacting with the subscriber module eUICC of the communication device 200, e.g. using the managing entity, or by reading the authorization secret from the communication device 200 packaging.

Action S501: The device owner / end-user 130, for example via the end-user device 110, orders a profile for the communication device 200 from an MNO entity 400. The authorization secret and the EID are provided to the MNO entity 400.

Action S502: (optional) In case there is a batch of communication devices 200 for which subscription profiles have been ordered, the MNO entity 400 computes an individual authorization secret for the communication device 200 from a batch authorization secret. If the batch of communication devices 200 share the same authorization secret, this authorization secret can also be used.

Action S503: The MNO entity 400 provides a download order command, for example by providing an ES2+ DownloadOrder message, to the SM-DP+ 300b to initiate subscription profile preparation.

Action S504: The SM-DP+ 300b prepares the subscription profile and links it to the EID of the communication device 200 obtained from the MNO entity 400.

Action S505: The MNO entity 400 confirms the order, for example by providing an ES2+ ConfirmOrder message, to the SM-DP+ 300b to confirm the subscription profile download. The Confirm Order message does not comprise the SM-DS 300a address to which the SM-DS 300a event shall be registered. The ConfirmOrder message comprise a Matching ID (MID) generated by the MNO entity 400. In case of a default SM-DP+ 300b, the MID is provided by the MNO entity 400 and is an empty string. The message comprises the authorization secret.

S506: The SM-DP+ 300b stores the authorization secret and MID along with the prepared subscription profile and EID.

Action S508: The MNO entity 400 releases the subscription profile for download, for example by sending an ES2+ ReleaseProfile message to the SM-DP+ 300b.

S509: The communication device 200 is triggered to download subscription profile from the default SM-DP+ 300b given by the default SM-DP+ 300b address configured in the communication device 200.

S514: The communication device 200 and the SM-DP+ 300b performs subscription profile download and installation according to below actions S514a-S514j.

S514a: Mutual authentication is performed between the communication device 200 including the subscriber module 240 and the SM-DP+ 300b. The SM-DP+ 300b obtains the EID of the eUICC of the communication device 200 from the eUICC certificate.

S514b: Upon success authentication, the SM-DP+ 300b checks for a pending subscription profile to be downloaded to the communication device 200.

S514c: In the response to the AuthenticateClient command sent as part of step S514a the SM-DP+ 300b includes, in addition to the parameters according to the SGP.22, a MAC computed using the authorization secret as key on all or parts of the data of the response (e.g. the MAC may be computed on the smdpSignature2).

S514d: The PA triggers PrepareDownload function of the subscriber module 240 according to the SGP.22 standard.

S514e: The subscriber module eUICCof the communication device 200 verifies the MAC using the stored authorization secret as part of processing the PrepareDownloadRequest. A successful verification ensures that the profile download is legitimate and is originating from the device owner/ end-user 130. The eUICC records in its internal session data that the profile may be automatically enabled without requiring a signed command/operation by a managing entity in order to enable the profile. The subscriber module eUICC then continues and generates and provides the PrepareDownloadResponse to PA.

S514f: The PA request the subscription profile from the SM-DP+ 300b, for example by sending a GetBoundProfilePackage message, where PrepareDownloadResponse is included, to the SM-DP+ 300b.

S514g: The SM-DP+ 300b returns the subscription as a BoundProfilePackage (BPP).

S514h: The PA triggers installation of the subscription profile in the subscriber module eUICC, for example by triggering a LoadBoundProfilePackage command in the subscriber module eUICC. Upon successful installation the subscriber module eUICC updates its internal session data such that the ICCID of the downloaded profile is marked as allowed to be automatically enabled.

S514i: A message indicating the result of the download, for example a ProfileInstallationResult message, is provided from the subscriber module eUICC via the PA to the SM-DP+ 300b. The SM-DP+ 300b forwards the message to the MNO entity 400.

S514j: Upon successful profile download the PA request to subscriber module eUICC to enable the profile. The request includes the ICCID of the profile that the PA obtained from the profile metadata. The subscriber module eUICC verifies that automatic enabling is allowed for the particular ICCID before enabling the profile.

Action S515: The communication device 200 connects to the network as given by the subscription profile.

Action S516: The IoT application 260 in the communication device 200 obtains managing entity details (e.g. address) and credentials for establishing secure communication. For example, this information can be read from the eUICC file system using APDU commands, or information is obtained from an IoT SAFE applet and where the IoT SAFE and its credentials is also involved in establishing the secure communication in action S517.

Action S517: Secure communication is established between the IoT application 260 of the communication device 200 and the managing entity 120 using credentials and information obtained in action S416, possibly with the use of the IoT SAFE applet.

Action S518: The communication device 200 registers with the managing entity 120.

The embodiment in Fig. 7 is shown for a single communication device 200 using a permanent authorization secret. Similar to what is described with reference to the embodiment of Fig. 6, a batch authorization secret may be used also here. Furthermore, all alternatives described at the end of the description of the embodiment of Fig. 6 related to the use of the authorization secret to authorize the SM-DS 300a event, including the authenticity part, are valid also for subscription profile download authorization.

When the MID is the empty string the derivation of an authorization secret by hashing the concatenation of the authorization secret and the MID does not result in an authorization secret individual per subscription profile download. The SM-DP+ 300b may derive an individual authorization secret per each subscription profile by replacing the MID with the transactionID in the derivation.

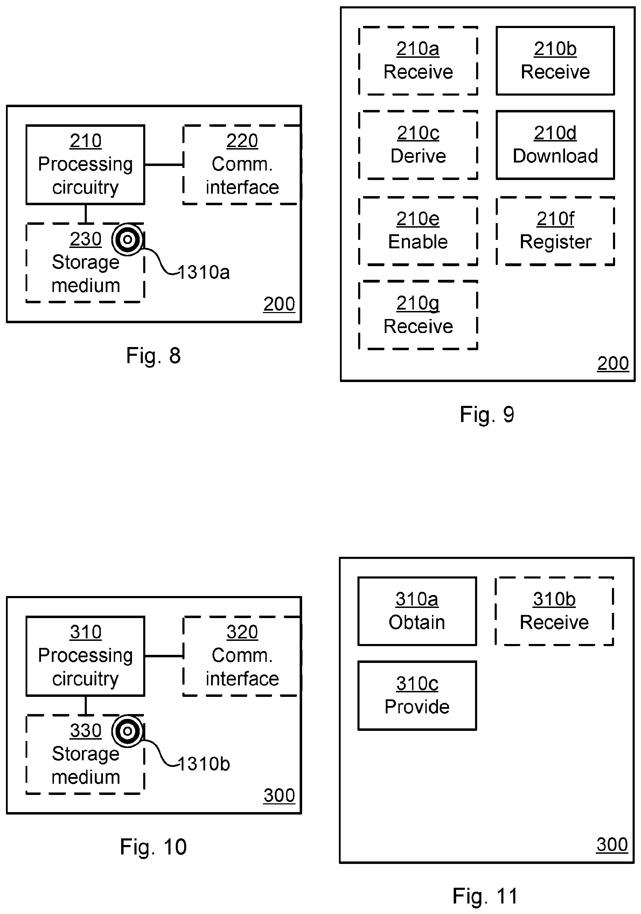

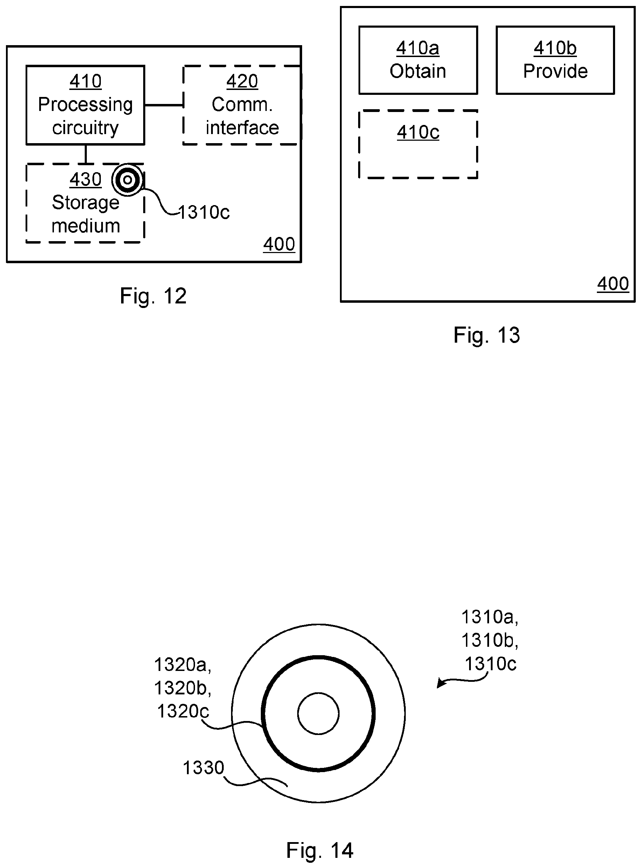

**Fig. 8** schematically illustrates, in terms of a number of functional units, the components of a communication device 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1310a (as in Fig. 14), e.g. in the form of a storage medium 230. The processing circuitry 210 may further be provided as at least one application specific integrated circuit (ASIC), or field programmable gate array (FPGA).

Particularly, the processing circuitry 210 and the subscriber module 240 are configured to cause the communication device 200 to perform a set of operations, or actions, as disclosed above. For example, the storage medium 230 may store the set of operations, and the processing circuitry 210 may be configured to retrieve the set of operations from the storage medium 230 to cause the communication device 200 to perform the set of operations. The set of operations may be provided as a set of executable instructions. Thus the processing circuitry 210 is thereby arranged to execute methods as herein disclosed.

The processing circuitry 210 is complemented by the subscriber module 240, i.e. the subscriber module 240, possesses the necessary processing power, software, and memory to handle the actions as set forth in this document.

The storage medium 230 may also comprise persistent storage, which, for example, can be any single one or combination of magnetic memory, optical memory, solid state memory or even remotely mounted memory.

The communication device 200 may further comprise a communications interface 220 for communications with other entities, functions, nodes, and devices, as in Fig. 1. As such the communications interface 220 may comprise one or more transmitters and receivers, comprising analogue and digital components.

The processing circuitry 210 controls the general operation of the communication device 200 e.g. by sending data and control signals to the communications interface 220 and the storage medium 230, by receiving data and reports from the communications interface 220, and by retrieving data and instructions from the storage medium 230. For some operations as described above the processing circuitry 210 interfaces with the subscriber module 240. Other components, as well as the related functionality, of the communication device 200 are omitted in order not to obscure the concepts presented herein.

**Fig. 9** schematically illustrates, in terms of a number of functional modules, the components of a communication device 200 according to an embodiment. The communication device 200 of Fig. 9 comprises a number of functional modules; a receive module 210b configured to perform action S104, and a download module 210d configured to perform action S108. The communication device 200 of Fig. 9 may further comprise a number of functional modules, such as any of a receive module 210a configured to perform action S102, a derive module 210c mainly configured in the subscriber module 240 to perform action S106, an enable module 210e mainly configured in the subscriber module 240 to perform action S110, a register module 210f configured to perform action S112, and a receive module 210g configured to perform action S114.

In general terms, each functional module 210a:210g may be implemented in hardware or in software. Preferably, one or more or all functional modules 210a:210g may be implemented by the processing circuitry 210, possibly in cooperation with the communications interface 220 and the storage medium 230. The functional modules 210c and 210e are mainly implemented by processing power, software, and memory of the subscriber module 240. The processing circuitry 210 and the subscriber module 240 may thus be arranged to fetch instructions as provided by a functional module 210a:210g and to execute these instructions, thereby performing any actions of the communication device 200 as disclosed herein.

**Fig. 10** schematically illustrates, in terms of a number of functional units, the components of a subscription management entity 300 according to an embodiment. Processing circuitry 310 is provided using any combination of one or more of a suitable central processing unit (CPU), multiprocessor, microcontroller, digital signal processor (DSP), etc., capable of executing software instructions stored in a computer program product 1310b (as in Fig. 14), e.g. in the form of a storage medium 330. The processing circuitry 310 may further be provided as at least one application specific integrated circuit (ASIC), or field programmable gate array (FPGA).

Particularly, the processing circuitry 310 is configured to cause the subscription management entity 300 to perform a set of operations, or actions, as disclosed above. For example, the storage medium 330 may store the set of operations, and the processing circuitry 310 may be configured to retrieve the set of operations from the storage medium 330 to cause the subscription management entity 300 to perform the set of operations. The set of operations may be provided as a set of executable instructions. Thus the processing circuitry 310 is thereby arranged to execute methods as herein disclosed.

The storage medium 330 may also comprise persistent storage, which, for example, can be any single one or combination of magnetic memory, optical memory, solid state memory or even remotely mounted memory.

The subscription management entity 300 may further comprise a communications interface 320 for communications with other entities, functions, nodes, and devices, as in Fig. 1. As such the communications interface 320 may comprise one or more transmitters and receivers, comprising analogue and digital components.

The processing circuitry 310 controls the general operation of the subscription management entity 300 e.g. by sending data and control signals to the communications interface 320 and the storage medium 330, by receiving data and reports from the communications interface 320, and by retrieving data and instructions from the storage medium 330. Other components, as well as the related functionality, of the subscription management entity 300 are omitted in order not to obscure the concepts presented herein.

**Fig. 11** schematically illustrates, in terms of a number of functional modules, the components of a subscription management entity 300 according to an embodiment. The subscription management entity 300 of Fig. 11 comprises a number of functional modules; an obtain module 310a configured to perform action S202, and a provide module 310c configured to perform action S206. The subscription management entity 300 of Fig. 11 may further comprise a number of optional functional modules, such a receive module 310b configured to perform action S204. In general terms, each functional module 310a:310c may be implemented in hardware or in software. Preferably, one or more or all functional modules 310a:310c may be implemented by the processing circuitry 310, possibly in cooperation with the communications interface 320 and the storage medium 330. The processing circuitry 310 may thus be arranged to from the storage medium 330 fetch instructions as provided by a functional module 310a:310c and to execute these instructions, thereby performing any actions of the subscription management entity 300 as disclosed herein.

**Fig. 12** schematically illustrates, in terms of a number of functional units, the components of a mobile network operator entity 400 according to an illustrative example. Processing circuitry 410 is provided using any combination of one or more of a suitable central processing unit (CPU), multiprocessor, microcontroller, digital signal processor (DSP), etc., capable of executing software instructions stored in a computer program product 1310c (as in Fig. 14), e.g. in the form of a storage medium 430. The processing circuitry 410 may further be provided as at least one application specific integrated circuit (ASIC), or field programmable gate array (FPGA).

Particularly, the processing circuitry 410 is configured to cause the mobile network operator entity 400 to perform a set of operations, or actions, as disclosed above. For example, the storage medium 430 may store the set of operations, and the processing circuitry 410 may be configured to retrieve the set of operations from the storage medium 430 to cause the mobile network operator entity 400 to perform the set of operations. The set of operations may be provided as a set of executable instructions. Thus the processing circuitry 410 is thereby arranged to execute methods as herein disclosed.

The storage medium 430 may also comprise persistent storage, which, for example, can be any single one or combination of magnetic memory, optical memory, solid state memory or even remotely mounted memory.

The mobile network operator entity 400 may further comprise a communications interface 420 for communications with other entities, functions, nodes, and devices, as in Fig. 1. As such the communications interface 420 may comprise one or more transmitters and receivers, comprising analogue and digital components.

The processing circuitry 410 controls the general operation of the mobile network operator entity 400 e.g. by sending data and control signals to the communications interface 420 and the storage medium 430, by receiving data and reports from the communications interface 420, and by retrieving data and instructions from the storage medium 430. Other components, as well as the related functionality, of the mobile network operator entity 400 are omitted in order not to obscure the concepts presented herein.

**Fig. 13** schematically illustrates, in terms of a number of functional modules, the components of a mobile network operator entity 400 according to an illustrative example. The mobile network operator entity 400 of Fig. 13 comprises a number of functional modules; an obtain module 410a configured to perform action S302, and a provide module 410b configured to perform action S304. The mobile network operator entity 400 of Fig. 13 may further comprise a number of optional functional modules, as represented by functional module 410c. In general terms, each functional module 410a:410c may be implemented in hardware or in software. Preferably, one or more or all functional modules 410a:410c may be implemented by the processing circuitry 410, possibly in cooperation with the communications interface 420 and the storage medium 430. The processing circuitry 410 may thus be arranged to from the storage medium 430 fetch instructions as provided by a functional module 410a:410c and to execute these instructions, thereby performing any actions of the mobile network operator entity 400 as disclosed herein.

**Fig. 14** shows one example of a computer program product 1310a, 1310b, 1310c comprising computer readable means 1330. On this computer readable means 1330, a computer program 1320a can be stored, which computer program 1320a can cause the processing circuitry 210 and thereto operatively coupled entities and devices, such as the communications interface 220 and the storage medium 230, to execute methods according to embodiments described herein. The computer program 1320a and/or computer program product 1310a may thus provide means for performing any actions of the communication device 200 as herein disclosed. On this computer readable means 1330, a computer program 1320b can be stored, which computer program 1320b can cause the processing circuitry 310 and thereto operatively coupled entities and devices, such as the communications interface 320 and the storage medium 330, to execute methods according to embodiments described herein. The computer program 1320b and/or computer program product 1310b may thus provide means for performing any actions of the subscription management entity 300 as herein disclosed. On this computer readable means 1330, a computer program 1320c can be stored, which computer program 1320c can cause the processing circuitry 410 and thereto operatively coupled entities and devices, such as the communications interface 420 and the storage medium 430, to execute methods according to embodiments described herein. The computer program 1320c and/or computer program product 1310c may thus provide means for performing any actions of the mobile network operator entity 400 as herein disclosed.

In the example of Fig. 14, the computer program product 1310a, 1310b, 1310c is illustrated as an optical disc, such as a CD (compact disc) or a DVD (digital versatile disc) or a Blu-Ray disc. The computer program product 1310a, 1310b, 1310c could also be embodied as a memory, such as a random access memory (RAM), a read-only memory (ROM), an erasable programmable read-only memory (EPROM), or an electrically erasable programmable read-only memory (EEPROM) and more particularly as a nonvolatile storage medium of a device in an external memory such as a USB (Universal Serial Bus) memory or a Flash memory, such as a compact Flash memory. Thus, while the computer program 1320a, 1320b, 1320c is here schematically shown as a track on the depicted optical disk, the computer program 1320a, 1320b, 1320c can be stored in any way which is suitable for the computer program product 1310a, 1310b, 1310c.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A method for subscription profile download, the method being performed by a communication device (200) comprising a subscriber module (240) being configured with a first authorization secret, the method comprising:
receiving (S104) and providing to the subscriber module (240), as part of performing a subscription profile download procedure, second authorization information from a subscription management entity (300), wherein the subscription management entity (300) is a Subscription Manager Discovery Server, SM-DS, entity (300a), wherein the second authorization information is generated using a second authorization secret, wherein the second authorization information is a second message authentication code, MAC, computed by the subscription management entity (300) using the second authorization secret and a piece of data, the piece of data being received by the communication device (200) from the subscription management entity (330) and provided to the subscriber module (240), wherein the second authorization information is received together with an event record providing subscription profile download information comprising enhanced Subscription Manager Data Preparation entity, SM-DP+, information and Matching ID, and wherein the event record is protected by the SM-DS entity (300a), wherein the event record is protected using a MAC and the piece of data used in computing the second MAC by the SM-DS entity (300a) comprises the event record, and wherein verifying the protected event record comprises the subscriber module (240) verifying the MAC, and wherein the subscriber module (240) of the communication device (200) computes a first MAC on the piece of data using the first authorization secret as key, and wherein, in accordance with the matching criterion, the second authorization information matches the first authorization secret only when the second MAC is identical to the first MAC;
the subscriber module (240) verifying (S107) the second authorization information against the first authorization secret using a matching criterion;
the subscriber module (240) verifying (S107b) the protected event record;
the subscriber module (240) storing (S107c), upon successful verification, the subscription profile download information;
the subscriber module (240) verifying (S108a), while interacting with the SM-DP+ server (300b) during the download of the profile, that the stored subscription profile download information matches received information about the SM-DP+ and Matching ID to be used; and
downloading (S108) the subscription profile only if the second authorization information, according to the matching criterion, matches the first authorization secret.

2. The method according to claim 1, wherein the first authorization secret is preconfigured in the subscriber module (240) of the communication device (200).

3. The method according to claim 1, wherein the first authorization secret is obtained by the subscriber module (240) of the communication device (200) from a managing entity (120).

4. The method according to claim 1, wherein the first authorization secret is generated by the subscriber module (240) of the communication device (200).

5. The method according to claim 1, wherein the method further comprises:
performing (S112) a registration procedure with a managing entity (120) for registering with the managing entity (120); and
receiving (S114) a request from the managing entity (120) to enable the subscription profile as downloaded.

6. The method according to claim 1, wherein the method further comprises:
the subscriber module (240) deriving (S106) an authorization secret from the first authorization secret using an identifier individual per subscription profile download, and wherein, in accordance with the matching criterion, the first authorization secret is replaced by the derived authorization secret in the matching.

7. The method according to claim 1 or 6, wherein the second authorization information is data as encrypted by the subscription management entity (300) using the second authorization secret as key, wherein the first authorization secret is used by the subscriber module (240) of the communication device (200) for decrypting the second authorization information and wherein, in accordance with the matching criterion, the second authorization information matches the first authorization secret only when the subscriber module (240) of the communication device (200) is able to decode the piece of data and verify correctness of the data as decrypted.

8. The method according to claim 1 or 6, wherein the communication device (200), to the subscription management entity (300), sends data as encrypted by the subscriber module (240) using the first authorization secret as key, wherein the second authorization secret is used by the subscription management entity (300) for decrypting the piece of data, wherein the second authorization information equals the decrypted data, and wherein, in accordance with the matching criterion, the second authorization information matches the first authorization secret only when the subscriber module (240) of the communication device (200) is able to verify that the subscription management entity (300) has successfully decrypted the piece of data.

9. The method according to claim 1, wherein the first authorization secret has a limited validity in time, wherein the validity in time is bounded by a time window, and wherein, in accordance with the matching criterion, the second authorization secret fails to match the first authorization secret when being received outside the time window.

10. The method according to claim 1, wherein the second authorization information equals the second authorization secret, and wherein the second authorization secret is received encrypted from the subscription management entity (300) for decryption by the subscriber module (240).

11. The method according to claim 1, wherein the event record is protected using digital signature by the SM-DS entity (300a) using the same key pair as was used during the SM-DS authentication and the signature including the transaction ID such that the signed event record is linked to the SM-DS authentication, and wherein verifying the protected event record comprises the subscriber module (240) of the communication device (200) verifying the SM-DS signature.

12. A method for enabling subscription profile download to a communication device (200), the method being performed by a subscription management entity (300), the method comprising:
obtaining (S202), from a mobile network operator entity (400) or a second subscription management entity (300), wherein the subscription management entity (300) is a Subscription Manager Discovery Server, SM-DS, entity (300a), a message for preparing for download of a subscription profile for the communication device (200), wherein the message comprises a third authorization secret for the communication device (200); and
providing (S206), as part of performing a subscription profile download procedure, second authorization information to a subscriber module (240) of the communication device (200), wherein the second authorization information is generated using a second authorization secret, wherein the second authorization secret is derivable, by the subscription management entity (300), from the third authorization secret and a second authorization information, wherein the second authorization information is a second message authentication code, MAC, computed by the subscription management entity (300) using the second authorization secret and a piece of data, the piece of data being provided to the subscriber module (240) of the communication device (200) by the subscription management entity (300), wherein the second authorization secret is provided together with an event record providing subscription profile download information comprising enhanced Subscription Manager Data Preparation entity, SM-DP+, information and Matching ID, and wherein the event record is protected by the SM-DS entity (300a),
wherein the event record is protected using a MAC and the piece of data used in computing the second MAC by the SM-DS entity (300a) comprises the event record, and wherein verifying the protected event record comprises the subscriber module verifying the MAC, and wherein the subscriber module (240) of the communication device (200) is configured with a first authorization secret and computes a first MAC on the piece of data using the first authorization secret as key, and wherein, in accordance with the matching criterion, the second authorization information matches the first authorization secret only when the second MAC is identical to the first MAC.

13. The method according to claim 12, wherein the second authorization information equals the second authorization secret, and wherein the second authorization secret is encrypted by the subscription management entity (300) before being provided to the subscriber module (240) of the communication device (200).

14. The method according to claim 12, wherein the message comprises a subscriber module identifier of the subscriber module (240) of the communication device (200) for which the subscription profile is intended, wherein the third authorization secret is a batch authorization secret, and wherein the second authorization secret is derived from the batch authorization secret using the subscriber module identifier.

15. The method according to claim 12, wherein the second authorization secret is derived from the third authorization secret using an identifier individual per subscription profile download, and wherein the identifier individual per subscription profile download is generated by the subscription management entity (300), or the message comprises the identifier individual per subscription profile download.

16. A communication device (200) for subscription profile download, the communication device (200) comprising a subscriber module (240) being configured with a first authorization secret, the communication device (200) and the subscriber module (240) comprising processing circuitry (210), the processing circuitry being configured to cause the communication device (200) to:
receive and provide to the subscriber module (240), as part of performing a subscription profile download procedure, second authorization information from a subscription management entity (300), wherein the subscription management entity (300) is a Subscription Manager Discovery Server, SM-DS, entity (300a), wherein the second authorization information is generated using a second authorization secret, wherein the second authorization information is a second message authentication code, MAC, computed by the subscription management entity (300) using the second authorization secret and a piece of data, the piece of data being received by the communication device (200) from the subscription management entity (300) and provided to the subscriber module (240), wherein the second authorization information is received together with an event record providing subscription profile download information comprising enhanced Subscription Manager Data Preparation entity, SM-DP+, information and Matching ID, and wherein the event record is protected by the SM-DS entity (300a), wherein the event record is protected using a MAC and the piece of data used in computing the second MAC by the SM-DS entity (300a) comprises the event record, and wherein verifying the protected event record comprises the subscriber module (240) verifying the MAC, and wherein the subscriber module (240) of the communication device (200) computes a first MAC on the piece of data using the first authorization secret as key, and wherein, in accordance with the matching criterion, the second authorization information matches the first authorization secret only when the second MAC is identical to the first MAC;
verify using the subscriber module (240) the second authorization information against the first authorization secret using a matching criterion;
the subscriber module (240) verifying (S107b) the protected event record;
the subscriber module (240) storing (S107c), upon successful verification, the subscription profile download information;
the subscriber module (240) verifying (S108a), while interacting with the SM-DP+ server (300b) during the download of the profile, that the stored subscription profile download information matches received information about the SM-DP+ and Matching ID to be used; and
download the subscription profile only if the second authorization information, according to the matching criterion, matches the first authorization secret.

17. A subscription management entity (300), wherein the subscription management entity (300) is a Subscription Manager Discovery Server, SM-DS, entity (300a), for enabling subscription profile download to a communication device (200), the subscription management entity (300) comprising processing circuitry (310), the processing circuitry being configured to cause the subscription management entity (300) to:
obtain, from a mobile network operator entity (400) or a second subscription management entity (300), a message for preparing for download of a subscription profile for the communication device (200), wherein the message comprises a third authorization secret for the communication device (200); and
provide, as part of performing a subscription profile download procedure, second authorization information to a subscriber module (240) of the communication device (200), wherein the second authorization information is generated using a second authorization secret, wherein the second authorization secret is derivable, by the subscription management entity (300), from the third authorization secret and a second authorization information, wherein the second authorization information is a second message authentication code, MAC, computed by the subscription management entity (300) using the second authorization secret and a piece of data, the piece of data being provided to the subscriber module (240) of the communication device (200) by the subscription management entity (300), wherein the second authorization secret is provided together with an event record providing subscription profile download information comprising enhanced Subscription Manager Data Preparation entity, SM-DP+, information and Matching ID, and wherein the event record is protected by the SM-DS entity (300a)
wherein the event record is protected using a MAC and the piece of data used in computing the second MAC by the SM-DS entity (300a) comprises the event record, and wherein verifying the protected event record comprises the subscriber module verifying the MAC, and wherein the subscriber module (240) of the communication device (200) is configured with a first authorization secret and computes a first MAC on the piece of data using the first authorization secret as key, and wherein, in accordance with the matching criterion, the second authorization information matches the first authorization secret only when the second MAC is identical to the first MAC.

## Patentansprüche

1. Verfahren zum Herunterladen eines Abonnementprofils, wobei das Verfahren von einer Kommunikationsvorrichtung (200) durchgeführt wird, die ein Teilnehmermodul (240) umfasst, das mit einem ersten Autorisierungsgeheimnis konfiguriert ist, wobei das Verfahren Folgendes umfasst:
Empfangen (S104) von zweiten Autorisierungsinformationen von einer Abonnementverwaltungsentität (300) und Bereitstellen derselben für das Teilnehmermodul (240) als Teil des Durchführens einer Prozedur zum Herunterladen eines Abonnementprofils, wobei die Abonnementverwaltungsentität (300) eine Subscription Manager Discovery Server-Entität, SM-DS-Entität, (300a) ist, wobei die zweiten Autorisierungsinformationen unter Verwendung eines zweiten Autorisierungsgeheimnisses erzeugt werden, wobei es sich bei den zweiten Autorisierungsinformationen um einen zweiten Nachrichtenauthentifizierungscode, MAC, handelt, der von der Abonnementverwaltungsentität (300) unter Verwendung des zweiten Autorisierungsgeheimnisses und eines Datenelements berechnet wird, wobei das Datenelement durch die Kommunikationsvorrichtung (200) von der Abonnementverwaltungsentität (330) empfangen und dem Teilnehmermodul (240) bereitgestellt wird, wobei die zweiten Autorisierungsinformationen zusammen mit einem Ereignisdatensatz empfangen werden, der Informationen zum Herunterladen eines Abonnementprofils bereitstellt, die erweiterte Informationen zu einer Subscription Manager Data Preparation-Entität, SM-DP+-Entität, und eine Matching-ID umfassen, und wobei der Ereignisdatensatz durch die SM-DS-Entität (300a) geschützt wird, wobei der Ereignisdatensatz unter Verwendung eines MAC geschützt wird und das beim Berechnen des zweiten MAC durch die SM-DS-Entität (300a) verwendete Datenelement den Ereignisdatensatz umfasst, und wobei das Verifizieren des geschützten Ereignisdatensatzes umfasst, dass das Teilnehmermodul (240) den MAC verifiziert, und wobei das Teilnehmermodul (240) der Kommunikationsvorrichtung (200) einen ersten MAC an dem Datenelement unter Verwendung des ersten Autorisierungsgeheimnisses als Schlüssel berechnet, und wobei gemäß dem Übereinstimmungskriterium die zweiten Autorisierungsinformationen nur dann mit dem ersten Autorisierungsgeheimnis übereinstimmen, wenn der zweite MAC mit dem ersten MAC identisch ist;
wobei das Teilnehmermodul (240) die zweiten Autorisierungsinformationen gegenüber dem ersten Autorisierungsgeheimnis unter Verwendung eines Übereinstimmungskriteriums verifiziert (S107);
das Teilnehmermodul (240) den geschützten Ereignisdatensatz verifiziert (S107b);
das Teilnehmermodul (240) die Informationen zum Herunterladen eines Abonnementprofils nach erfolgreicher Verifizierung speichert (S107c);
das Teilnehmermodul (240) bei der Interaktion mit dem SM-DP+-Server (300b) während des Herunterladens des Profils verifiziert (S108a), ob die gespeicherten Informationen zum Herunterladen eines Abonnementprofils mit den empfangenen Informationen über die SM-DP+ und der zu verwendenden Matching-ID übereinstimmen; und
Herunterladen (S108) des Abonnementprofils nur dann, wenn die zweiten Autorisierungsinformationen gemäß dem Übereinstimmungskriterium mit dem ersten Autorisierungsgeheimnis übereinstimmen.

2. Verfahren nach Anspruch 1, wobei das erste Autorisierungsgeheimnis im Teilnehmermodul (240) der Kommunikationsvorrichtung (200) vorkonfiguriert wird.

3. Verfahren nach Anspruch 1, wobei das erste Autorisierungsgeheimnis durch das Teilnehmermodul (240) der Kommunikationsvorrichtung (200) von einer Verwaltungsentität (120) erhalten wird.

4. Verfahren nach Anspruch 1, wobei das erste Autorisierungsgeheimnis vom Teilnehmermodul (240) der Kommunikationsvorrichtung (200) erzeugt wird.

5. Verfahren nach Anspruch 1, wobei das Verfahren ferner Folgendes umfasst:
Durchführen (S112) einer Registrierungsprozedur bei einer Verwaltungsentität (120) zur Registrierung bei der Verwaltungsentität (120); and
Empfangen (S114) eines Anforderung von der Verwaltungsentität (120) zum Aktivieren des Abonnementprofils, wie heruntergeladen.

6. Verfahren nach Anspruch 1, wobei das Verfahren ferner umfasst, dass:
das Teilnehmermodul (240) ein Autorisierungsgeheimnis von dem ersten Autorisierungsgeheimnis unter Verwendung einer individuellen Kennung pro heruntergeladenem Abonnementprofil ableitet (S106), und wobei gemäß dem Übereinstimmungskriterium das erste Autorisierungsgeheimnis durch das abgeleitete Autorisierungsgeheimnis bei der Übereinstimmung ersetzt wird.

7. Verfahren nach Anspruch 1 oder 6, wobei es sich bei den zweiten Autorisierungsinformationen um von der Abonnementverwaltungsentität (300) unter Verwendung des zweiten Autorisierungsgeheimnisses als Schlüssel verschlüsselte Daten handelt, wobei das erste Autorisierungsgeheimnis von dem Teilnehmermodul (240) der Kommunikationsvorrichtung (200) zum Entschlüsseln der zweiten Autorisierungsinformationen verwendet wird und wobei gemäß dem Übereinstimmungskriterium die zweiten Autorisierungsinformationen nur dann mit dem ersten Autorisierungsgeheimnis übereinstimmen, wenn das Teilnehmermodul (240) der Kommunikationsvorrichtung (200) in der Lage ist, das Datenelement zu decodieren und die Korrektheit der Daten, wie entschlüsselt, zu verifizieren.

8. Verfahren nach Anspruch 1 oder 6, wobei die Kommunikationsvorrichtung (200) Daten, wie vom Teilnehmermodul (240) verschlüsselt, unter Verwendung des ersten Autorisierungsgeheimnisses als Schlüssel an die Abonnementverwaltungsentität (300) sendet, wobei das zweite Autorisierungsgeheimnis von der Abonnementverwaltungsentität (300) zum Entschlüsseln des Datenelements verwendet wird, wobei die zweiten Autorisierungsinformationen den entschlüsselten Daten entsprechen und wobei gemäß dem Übereinstimmungskriterium die zweiten Autorisierungsinformationen nur dann mit dem ersten Autorisierungsgeheimnis übereinstimmen, wenn das Teilnehmermodul (240) der Kommunikationsvorrichtung (200) in der Lage ist, zu verifizieren, dass die Abonnementverwaltungsentität (300) das Datenelement erfolgreich entschlüsselt hat.

9. Verfahren nach Anspruch 1, wobei das erste Autorisierungsgeheimnis eine begrenzte Gültigkeitsdauer aufweist, wobei die Gültigkeitsdauer durch ein Zeitfenster begrenzt ist und wobei gemäß dem Übereinstimmungskriterium das zweite Autorisierungsgeheimnis nicht mit dem ersten Autorisierungsgeheimnis übereinstimmt, wenn es außerhalb des Zeitfensters empfangen wird.

10. Verfahren nach Anspruch 1, wobei die zweiten Autorisierungsinformationen dem zweiten Autorisierungsgeheimnis entsprechen und wobei das zweite Autorisierungsgeheimnis zur Entschlüsselung durch die Abonnementverwaltungsentität (300) vom Teilnehmermodul (240) verschlüsselt empfangen wird.

11. Verfahren nach Anspruch 1, wobei der Ereignisdatensatz unter Verwendung einer digitalen Signatur durch die SM-DS-Entität (300a) geschützt wird, indem sie dasselbe Schlüsselpaar wie dasjenige verwendet, das während der SM-DS-Authentifizierung verwendet wurde, und die Signatur die Transaktions-ID umfasst, sodass der signierte Ereignisdatensatz mit der SM-DS-Authentifizierung verknüpft ist, und wobei das Verifizieren des geschützten Ereignisdatensatzes umfasst, dass das Teilnehmermodul (240) der Kommunikationsvorrichtung (200) die SM-DS-Signatur verifiziert.

12. Verfahren zum Ermöglichen des Herunterladens eines Abonnementprofils auf eine Kommunikationsvorrichtung (200), wobei das Verfahren von einer Abonnementverwaltungsentität (300) durchgeführt wird, wobei das Verfahren Folgendes umfasst:
Erhalten (S202) einer Nachricht von einer Mobilfunknetzwerkbetreiberentität (400) oder einer zweiten Abonnementverwaltungsentität (300) zur Vorbereitung für das Herunterladen eines Abonnementprofils für die Kommunikationsvorrichtung (200), wobei die Abonnementverwaltungsentität (300) eine Subscription Manager Discovery Server-Entität, SM-DS-Entität, (300a) ist, wobei die Nachricht ein drittes Autorisierungsgeheimnis für die Kommunikationsvorrichtung (200) umfasst; und
Bereitstellen (S206) von zweiten Autorisierungsinformationen für ein Teilnehmermodul (240) der Kommunikationsvorrichtung (200) als Teil des Durchführens einer Prozedur zum Herunterladen eines Abonnementprofils, wobei die zweiten Autorisierungsinformationen unter Verwendung eines zweiten Autorisierungsgeheimnisses erzeugt werden, wobei das zweite Autorisierungsgeheimnis durch die Abonnementverwaltungsentität (300) von dem dritten Autorisierungsgeheimnis und zweiten Autorisierungsinformationen abgeleitet werden kann, wobei es sich bei den zweiten Autorisierungsinformationen um einen zweiten Nachrichtenauthentifizierungscode, MAC, handelt, der von der Abonnementverwaltungsentität (300) unter Verwendung des zweiten Autorisierungsgeheimnisses und eines Datenelements berechnet wird, wobei das Datenelement durch die Abonnementverwaltungsentität (300) dem Teilnehmermodul (240) der Kommunikationsvorrichtung (200) bereitgestellt wird, wobei das zweite Autorisierungsgeheimnis zusammen mit einem Ereignisdatensatz bereitgestellt wird, der Informationen zum Herunterladen eines Abonnementprofils bereitstellt, die erweiterte Informationen über eine Subscription Manager Data Preparation-Entität, SM-DP+-Entität, und eine Matching-ID umfassen, und wobei der Ereignisdatensatz durch die SM-DS-Entität (300a) geschützt wird, wobei der Ereignisdatensatz unter Verwendung eines MAC geschützt wird und das beim Berechnen des zweiten MAC durch die SM-DS-Entität (300a) verwendete Datenelement den Ereignisdatensatz umfasst, und wobei das Verifizieren des geschützten Ereignisdatensatzes umfasst, dass das Teilnehmermodul den MAC verifiziert, und wobei das Teilnehmermodul (240) der Kommunikationsvorrichtung (200) mit einem ersten Autorisierungsgeheimnis konfiguriert ist und einen ersten MAC an dem Datenelement unter Verwendung des ersten Autorisierungsgeheimnisses als Schlüssel berechnet, und wobei gemäß dem Übereinstimmungskriterium die zweiten Autorisierungsinformationen nur dann mit dem ersten Autorisierungsgeheimnis übereinstimmen, wenn der zweite MAC mit dem ersten MAC identisch ist.

13. Verfahren nach Anspruch 12, wobei die zweiten Autorisierungsinformationen dem zweiten Autorisierungsgeheimnis entsprechen und wobei das zweite Autorisierungsgeheimnis von der Abonnementverwaltungsentität (300) verschlüsselt wird, bevor es dem Teilnehmermodul (240) der Kommunikationsvorrichtung (200) bereitgestellt wird.

14. Verfahren nach Anspruch 12, wobei die Nachricht eine Teilnehmermodulkennung des Teilnehmermoduls (240) der Kommunikationsvorrichtung (200) umfasst, für die das Abonnementprofil bestimmt ist, wobei das dritte Autorisierungsgeheimnis ein Batch-Autorisierungsgeheimnis ist und wobei das zweite Autorisierungsgeheimnis unter Verwendung der Teilnehmermodulkennung von dem Batch-Autorisierungsgeheimnis abgeleitet wird.

15. Verfahren nach Anspruch 12, wobei das zweite Autorisierungsgeheimnis von dem dritten Autorisierungsgeheimnis unter Verwendung einer individuellen Kennung pro heruntergeladenem Abonnementprofil abgeleitet wird und wobei die individuelle Kennung pro heruntergeladenem Abonnementprofil von der Abonnementverwaltungsentität (300) erzeugt wird oder die Nachricht die individuelle Kennung pro heruntergeladenem Abonnementprofil umfasst.

16. Kommunikationsvorrichtung (200) zum Herunterladen eines Abonnementprofils, wobei die Kommunikationsvorrichtung (200) ein Teilnehmermodul (240) umfasst, das mit einem ersten Autorisierungsgeheimnis konfiguriert ist, wobei die Kommunikationsvorrichtung (200) und das Teilnehmermodul (240) Verarbeitungsschaltungsanordnung (210) umfassen, wobei die Verarbeitungsschaltungsanordnung dazu konfiguriert ist, die Kommunikationsvorrichtung (200) zu Folgendem zu veranlassen:
Empfangen von zweiten Autorisierungsinformationen von einer Abonnementverwaltungsentität (300) und Bereitstellen derselben für das Teilnehmermodul (240) als Teil des Durchführens einer Prozedur zum Herunterladen eines Abonnementprofils, wobei die Abonnementverwaltungsentität (300) eine Subscription Manager Discovery Server-Entität, SM-DS-Entität, (300a) ist, wobei die zweiten Autorisierungsinformationen unter Verwendung eines zweiten Autorisierungsgeheimnisses erzeugt werden, wobei es sich bei den zweiten Autorisierungsinformationen um einen zweiten Nachrichtenauthentifizierungscode, MAC, handelt, der von der Abonnementverwaltungsentität (300) unter Verwendung des zweiten Autorisierungsgeheimnisses und eines Datenelements berechnet wird, wobei das Datenelement durch die Kommunikationsvorrichtung (200) von der Abonnementverwaltungsentität (300) empfangen und dem Teilnehmermodul (240) bereitgestellt wird, wobei die zweiten Autorisierungsinformationen zusammen mit einem Ereignisdatensatz empfangen werden, der Informationen zum Herunterladen eines Abonnementprofils bereitstellt, die erweiterte Informationen über eine Subscription Manager Data Preparation-Entität, SM-DP+-Entität, und eine Matching-ID umfassen, und wobei der Ereignisdatensatz durch die SM-DS-Entität (300a) geschützt wird, wobei der Ereignisdatensatz unter Verwendung eines MAC geschützt wird und das beim Berechnen des zweiten MAC durch die SM-DS-Entität (300a) verwendete Datenelement den Ereignisdatensatz umfasst, und wobei das Verifizieren des geschützten Ereignisdatensatzes umfasst, dass das Teilnehmermodul (240) den MAC verifiziert, und wobei das Teilnehmermodul (240) der Kommunikationsvorrichtung (200) einen ersten MAC an dem Datenelement unter Verwendung des ersten Autorisierungsgeheimnisses als Schlüssel berechnet, und wobei gemäß dem Übereinstimmungskriterium die zweiten Autorisierungsinformationen nur dann mit dem ersten Autorisierungsgeheimnis übereinstimmen, wenn der zweite MAC mit dem ersten MAC identisch ist;
Verifizieren der zweiten Autorisierungsinformationen unter Verwendung des Teilnehmermoduls (240) gegenüber dem ersten Autorisierungsgeheimnis unter Verwendung eines Übereinstimmungskriteriums;
wobei das Teilnehmermodul (240) den geschützten Ereignisdatensatz verifiziert (S107b);
das Teilnehmermodul (240) die Informationen zum Herunterladen eines Abonnementprofils nach erfolgreicher Verifizierung speichert (S107c);
das Teilnehmermodul (240) bei der Interaktion mit dem SM-DP+-Server (300b) während des Herunterladens des Profils verifiziert (S108a), ob die gespeicherten Informationen zum Herunterladen eines Abonnementprofils mit den empfangenen Informationen über die SM-DP+ und der zu verwendenden Matching-ID übereinstimmen; and
Herunterladen des Abonnementprofils nur dann, wenn die zweiten Autorisierungsinformationen gemäß dem Übereinstimmungskriterium mit dem ersten Autorisierungsgeheimnis übereinstimmen.

17. Abonnementverwaltungsentität (300), wobei die Abonnementverwaltungsentität (300) eine Subscription Manager Discovery Server-Entität, SM-DS-Entität, (300a) ist, zum Ermöglichen des Herunterladens eines Abonnementprofils auf eine Kommunikationsvorrichtung (200), wobei die Abonnementverwaltungsentität (300) Verarbeitungsschaltungsanordnung (310) umfasst, wobei die Verarbeitungsschaltungsanordnung dazu konfiguriert ist, die Abonnementverwaltungsentität (300) zu Folgendem zu veranlassen:
Erhalten einer Nachricht zur Vorbereitung für das Herunterladen eines Abonnementprofils für die Kommunikationsvorrichtung (200) von einer Mobilfunknetzwerkbetreiberentität (400) oder einer zweiten Abonnementverwaltungsentität (300), wobei die Nachricht ein drittes Autorisierungsgeheimnis für die Kommunikationsvorrichtung (200) umfasst; und
Bereitstellen von zweiten Autorisierungsinformationen für ein Teilnehmermodul (240) der Kommunikationsvorrichtung (200) als Teil des Durchführens einer Prozedur zum Herunterladen eines Abonnementprofils, wobei die zweiten Autorisierungsinformationen unter Verwendung eines zweiten Autorisierungsgeheimnisses erzeugt werden, wobei das zweite Autorisierungsgeheimnis durch die Abonnementverwaltungsentität (300) von dem dritten Autorisierungsgeheimnis und zweiten Autorisierungsinformationen abgeleitet werden kann, wobei es sich bei den zweiten Autorisierungsinformationen um einen zweiten Nachrichtenauthentifizierungscode, MAC, handelt, der von der Abonnementverwaltungsentität (300) unter Verwendung des zweiten Autorisierungsgeheimnisses und eines Datenelements berechnet wird, wobei das Datenelement durch die Abonnementverwaltungsentität (300) dem Teilnehmermodul (240) der Kommunikationsvorrichtung (200) bereitgestellt wird, wobei das zweite Autorisierungsgeheimnis zusammen mit einem Ereignisdatensatz bereitgestellt wird, der Informationen zum Herunterladen eines Abonnementprofils bereitstellt, die erweiterte Informationen über eine Subscription Manager Data Preparation-Entität, SM-DP+-Entität, und eine Matching-ID umfassen, und wobei der Ereignisdatensatz durch die SM-DS-Entität (300a) geschützt wird, wobei der Ereignisdatensatz unter Verwendung eines MAC geschützt wird und das beim Berechnen des zweiten MAC durch die SM-DS-Entität (300a) verwendete Datenelement den Ereignisdatensatz umfasst, und wobei das Verifizieren des geschützten Ereignisdatensatzes umfasst, dass das Teilnehmermodul den MAC verifiziert, und wobei das Teilnehmermodul (240) der Kommunikationsvorrichtung (200) mit einem ersten Autorisierungsgeheimnis konfiguriert ist und einen ersten MAC an dem Datenelement unter Verwendung des ersten Autorisierungsgeheimnisses als Schlüssel berechnet, und wobei gemäß dem Übereinstimmungskriterium die zweiten Autorisierungsinformationen nur dann mit dem ersten Autorisierungsgeheimnis übereinstimmen, wenn der zweite MAC mit dem ersten MAC identisch ist.

## Revendications

1. Procédé de téléchargement de profil d'abonnement, le procédé étant réalisé par un dispositif de communication (200) comprenant un module d'abonné (240) étant configuré avec un premier secret d'autorisation, le procédé comprenant :
la réception (S104) et la fourniture, au module d'abonné (240), dans le cadre de la réalisation d'une procédure de téléchargement de profil d'abonnement, de deuxièmes informations d'autorisation depuis une entité de gestion d'abonnement (300), dans lequel l'entité de gestion d'abonnement (300) est une entité de serveur de découverte de gestionnaire d'abonnement, SM-DS, (300a), dans lequel les deuxièmes informations d'autorisation sont générées à l'aide d'un deuxième secret d'autorisation, dans lequel les deuxièmes informations d'autorisation sont un deuxième code d'authentification de message, MAC, calculé par l'entité de gestion d'abonnement (300) à l'aide du deuxième secret d'autorisation et d'un élément de données, l'élément de données étant reçu par le dispositif de communication (200) depuis l'entité de gestion d'abonnement (330) et fourni au module d'abonné (240), dans lequel les deuxièmes informations d'autorisation sont reçues ensemble avec un enregistrement d'événement fournissant des informations de téléchargement de profil d'abonnement comprenant des informations d'entité de préparation de données de gestionnaire d'abonnement améliorée, SM-DP+, et un identifiant de correspondance, et dans lequel l'enregistrement d'événement est protégé par l'entité SM-DS (300a), dans lequel l'enregistrement d'événement est protégé à l'aide d'un MAC et l'élément de données utilisé dans le calcul du deuxième MAC par l'entité SM-DS (300a) comprend l'enregistrement d'événement, et dans lequel la vérification de l'enregistrement d'événement protégé comprend la vérification du MAC par le module d'abonné (240), et dans lequel le module d'abonné (240) du dispositif de communication (200) calcule un premier MAC sur l'élément de données à l'aide du premier secret d'autorisation en tant que clé, et dans lequel, conformément au critère de correspondance, les deuxièmes informations d'autorisation correspondent au premier secret d'autorisation uniquement lorsque le deuxième MAC est identique au premier MAC ;
par le module d'abonné (240), la vérification (S107) des deuxièmes informations d'autorisation par rapport au premier secret d'autorisation à l'aide d'un critère de correspondance ;
par le module d'abonné (240), la vérification (S107b) de l'enregistrement d'événement protégé ;
par le module d'abonné (240), le stockage (S107c), lors d'une vérification réussie, des informations de téléchargement de profil d'abonnement ;
par le module d'abonné (240), la vérification (S108a), tout en interagissant avec le serveur SM-DP+ (300b) pendant le téléchargement du profil, que les informations de téléchargement de profil d'abonnement stockées correspondent à des informations reçues au sujet de la SM-DP+ et de l'identifiant de correspondance à utiliser ; et
le téléchargement (S108) du profil d'abonnement uniquement si les deuxièmes informations d'autorisation, conformément au critère de correspondance, correspondent au premier secret d'autorisation.

2. Procédé selon la revendication 1, dans lequel le premier secret d'autorisation est préconfiguré dans le module d'abonné (240) du dispositif de communication (200).

3. Procédé selon la revendication 1, dans lequel le premier secret d'autorisation est obtenu par le module d'abonné (240) du dispositif de communication (200) à partir d'une entité de gestion (120).

4. Procédé selon la revendication 1, dans lequel le premier secret d'autorisation est généré par le module d'abonné (240) du dispositif de communication (200).

5. Procédé selon la revendication 1, dans lequel le procédé comprend en outre :
la réalisation (S112) d'une procédure d'enregistrement avec une entité de gestion (120) pour l'enregistrement auprès de l'entité de gestion (120) ; et
la réception (S114) d'une demande depuis l'entité de gestion (120) pour activer le profil d'abonnement tel que téléchargé.

6. Procédé selon la revendication 1, dans lequel le procédé comprend en outre :
par le module d'abonné (240), la déduction (S106) d'un secret d'autorisation à partir du premier secret d'autorisation à l'aide d'un identifiant individuel par téléchargement de profil d'abonnement, et dans lequel, conformément au critère de correspondance, le premier secret d'autorisation est remplacé par le secret d'autorisation déduit dans la correspondance.

7. Procédé selon la revendication 1 ou 6, dans lequel les deuxièmes informations d'autorisation sont des données telles que chiffrées par l'entité de gestion d'abonnement (300) à l'aide du deuxième secret d'autorisation en tant que clé, dans lequel le premier secret d'autorisation est utilisé par le module d'abonné (240) du dispositif de communication (200) pour déchiffrer les deuxièmes informations d'autorisation et dans lequel, conformément au critère de correspondance, les deuxièmes informations d'autorisation correspondent au premier secret d'autorisation uniquement lorsque le module d'abonné (240) du dispositif de communication (200) est en mesure de décoder l'élément de données et de vérifier l'exactitude des données telles que déchiffrées.

8. Procédé selon la revendication 1 ou 6, dans lequel le dispositif de communication (200) envoie, à l'entité de gestion d'abonnement (300), des données telles que chiffrées par le module d'abonné (240) à l'aide du premier secret d'autorisation en tant que clé, dans lequel le deuxième secret d'autorisation est utilisé par l'entité de gestion d'abonnement (300) pour déchiffrer l'élément de données, dans lequel les deuxièmes informations d'autorisation sont égales aux données déchiffrées, et dans lequel, conformément au critère de correspondance, les deuxièmes informations d'autorisation correspondent au premier secret d'autorisation uniquement lorsque le module d'abonné (240) du dispositif de communication (200) est en mesure de vérifier que l'entité de gestion d'abonnement (300) a réussi à déchiffrer l'élément de données.

9. Procédé selon la revendication 1, dans lequel le premier secret d'autorisation présente une validité limitée dans le temps, dans lequel la validité dans le temps est délimitée par une fenêtre temporelle, et dans lequel, conformément au critère de correspondance, le deuxième secret d'autorisation ne parvient pas à correspondre au premier secret d'autorisation lorsqu'il est reçu à l'extérieur de la fenêtre temporelle.

10. Procédé selon la revendication 1, dans lequel les deuxièmes informations d'autorisation sont égales au deuxième secret d'autorisation, et dans lequel le deuxième secret d'autorisation est reçu chiffré depuis l'entité de gestion d'abonnement (300) pour un déchiffrement par le module d'abonné (240).

11. Procédé selon la revendication 1, dans lequel l'enregistrement d'événement est protégé à l'aide d'une signature numérique par l'entité SM-DS (300a) à l'aide de la même paire de clés que celle qui a été utilisée pendant l'authentification SM-DS et la signature incluant l'identifiant de transaction de sorte que l'enregistrement d'événement signé soit lié à l'authentification SM-DS, et dans lequel la vérification de l'enregistrement d'événement protégé comprend la vérification de la signature SM-DS par le module d'abonné (240) du dispositif de communication (200).

12. Procédé d'activation de téléchargement de profil d'abonnement vers un dispositif de communication (200), le procédé étant réalisé par une entité de gestion d'abonnement (300), le procédé comprenant :
l'obtention (S202), depuis une entité d'opérateur de réseau mobile (400) ou une deuxième entité de gestion d'abonnement (300), dans lequel l'entité de gestion d'abonnement (300) est une entité de serveur de découverte de gestionnaire d'abonnement, SM-DS, (300a), d'un message de préparation au téléchargement d'un profil d'abonnement pour le dispositif de communication (200), dans lequel le message comprend un troisième secret d'autorisation pour le dispositif de communication (200) ; et
la fourniture (S206), dans le cadre de la réalisation d'une procédure de téléchargement de profil d'abonnement, de deuxièmes informations d'autorisation à un module d'abonné (240) du dispositif de communication (200), dans lequel les deuxièmes informations d'autorisation sont générées à l'aide d'un deuxième secret d'autorisation, dans lequel le deuxième secret d'autorisation peut être déduit, par l'entité de gestion d'abonnement (300), à partir du troisième secret d'autorisation et de deuxièmes informations d'autorisation, dans lequel les deuxièmes informations d'autorisation sont un deuxième code d'authentification de message, MAC, calculé par l'entité de gestion d'abonnement (300) à l'aide du deuxième secret d'autorisation et d'un élément de données, l'élément de données étant fourni au module d'abonné (240) du dispositif de communication (200) par l'entité de gestion d'abonnement (300), dans lequel le deuxième secret d'autorisation est fourni ensemble avec un enregistrement d'événement fournissant des informations de téléchargement de profil d'abonnement comprenant des informations d'entité de préparation de données de gestionnaire d'abonnement améliorée, SM-DP+, et un identifiant de correspondance, et dans lequel l'enregistrement d'événement est protégé par l'entité SM-DS (300a), dans lequel l'enregistrement d'événement est protégé à l'aide d'un MAC et l'élément de données utilisé dans le calcul du deuxième MAC par l'entité SM-DS (300a) comprend l'enregistrement d'événement, et dans lequel la vérification de l'enregistrement d'événement protégé comprend la vérification du MAC par le module d'abonné, et dans lequel le module d'abonné (240) du dispositif de communication (200) est configuré avec un premier secret d'autorisation et calcule un premier MAC sur l'élément de données à l'aide du premier secret d'autorisation en tant que clé, et dans lequel, conformément au critère de correspondance, les deuxièmes informations d'autorisation correspondent au premier secret d'autorisation uniquement lorsque le deuxième MAC est identique au premier MAC.

13. Procédé selon la revendication 12, dans lequel les deuxièmes informations d'autorisation sont égales au deuxième secret d'autorisation, et dans lequel le deuxième secret d'autorisation est chiffré par l'entité de gestion d'abonnement (300) avant d'être fourni au module d'abonné (240) du dispositif de communication (200).

14. Procédé selon la revendication 12, dans lequel le message comprend un identifiant de module d'abonné du module d'abonné (240) du dispositif de communication (200) auquel le profil d'abonnement est destiné, dans lequel le troisième secret d'autorisation est un secret d'autorisation de lot, et dans lequel le deuxième secret d'autorisation est déduit du secret d'autorisation de lot à l'aide de l'identifiant de module d'abonné.

15. Procédé selon la revendication 12, dans lequel le deuxième secret d'autorisation est déduit du troisième secret d'autorisation à l'aide d'un identifiant individuel par téléchargement de profil d'abonnement, et dans lequel l'identifiant individuel par téléchargement de profil d'abonnement est généré par l'entité de gestion d'abonnement (300), ou le message comprend l'identifiant individuel par téléchargement de profil d'abonnement.

16. Dispositif de communication (200) pour un téléchargement de profil d'abonnement, le dispositif de communication (200) comprenant un module d'abonné (240) étant configuré avec un premier secret d'autorisation, le dispositif de communication (200) et le module d'abonné (240) comprenant une circuiterie de traitement (210), la circuiterie de traitement étant configurée pour amener le dispositif de communication (200) à :
recevoir et fournir, au module d'abonné (240), dans le cadre de la réalisation d'une procédure de téléchargement de profil d'abonnement, des deuxièmes informations d'autorisation depuis une entité de gestion d'abonnement (300), dans lequel l'entité de gestion d'abonnement (300) est une entité de serveur de découverte de gestionnaire d'abonnement, SM-DS, (300a), dans lequel les deuxièmes informations d'autorisation sont générées à l'aide d'un deuxième secret d'autorisation, dans lequel les deuxièmes informations d'autorisation sont un deuxième code d'authentification de message, MAC, calculé par l'entité de gestion d'abonnement (300) à l'aide du deuxième secret d'autorisation et d'un élément de données, l'élément de données étant reçu par le dispositif de communication (200) depuis l'entité de gestion d'abonnement (300) et fourni au module d'abonné (240), dans lequel les deuxièmes informations d'autorisation sont reçues ensemble avec un enregistrement d'événement fournissant des informations de téléchargement de profil d'abonnement comprenant des informations d'entité de préparation de données de gestionnaire d'abonnement améliorée, SM-DP+, et un identifiant de correspondance, et dans lequel l'enregistrement d'événement est protégé par l'entité SM-DS (300a), dans lequel l'enregistrement d'événement est protégé à l'aide d'un MAC et l'élément de données utilisé dans le calcul du deuxième MAC par l'entité SM-DS (300a) comprend l'enregistrement d'événement, et dans lequel la vérification de l'enregistrement d'événement protégé comprend la vérification du MAC par le module d'abonné (240), et dans lequel le module d'abonné (240) du dispositif de communication (200) calcule un premier MAC sur l'élément de données à l'aide du premier secret d'autorisation en tant que clé, et dans lequel, conformément au critère de correspondance, les deuxièmes informations d'autorisation correspondent au premier secret d'autorisation uniquement lorsque le deuxième MAC est identique au premier MAC ;
vérifier, à l'aide du module d'abonné (240), les deuxièmes informations d'autorisation par rapport au premier secret d'autorisation à l'aide d'un critère de correspondance ;
vérifier (S107b), à l'aide du module d'abonné (240), l'enregistrement d'événement protégé ;
stocker (S107c), à l'aide du module d'abonné (240), lors d'une vérification réussie, les informations de téléchargement de profil d'abonnement ;
vérifier (S108a), à l'aide du module d'abonné (240), tout en interagissant avec le serveur SM-DP+ (300b) pendant le téléchargement du profil, que les informations de téléchargement de profil d'abonnement stockées correspondent à des informations reçues au sujet de la SM-DP+ et de l'identifiant de correspondance à utiliser ; et
télécharger le profil d'abonnement uniquement si les deuxièmes informations d'autorisation, conformément au critère de correspondance, correspondent au premier secret d'autorisation.

17. Entité de gestion d'abonnement (300), dans laquelle l'entité de gestion d'abonnement (300) est une entité de serveur de découverte de gestionnaire d'abonnement, SM-DS, (300a) pour une activation de téléchargement de profil d'abonnement vers un dispositif de communication (200), l'entité de gestion d'abonnement (300) comprenant une circuiterie de traitement (310), la circuiterie de traitement étant configurée pour amener l'entité de gestion d'abonnement (300) à :
obtenir, depuis une entité d'opérateur de réseau mobile (400) ou une deuxième entité de gestion d'abonnement (300), un message de préparation au téléchargement d'un profil d'abonnement pour le dispositif de communication (200), dans laquelle le message comprend un troisième secret d'autorisation pour le dispositif de communication (200) ; et
fournir, dans le cadre de la réalisation d'une procédure de téléchargement de profil d'abonnement, des deuxièmes informations d'autorisation à un module d'abonné (240) du dispositif de communication (200), dans laquelle les deuxièmes informations d'autorisation sont générées à l'aide d'un deuxième secret d'autorisation, dans laquelle le deuxième secret d'autorisation peut être déduit, par l'entité de gestion d'abonnement (300), à partir du troisième secret d'autorisation et de deuxièmes informations d'autorisation, dans laquelle les deuxièmes informations d'autorisation sont un deuxième code d'authentification de message, MAC, calculé par l'entité de gestion d'abonnement (300) à l'aide du deuxième secret d'autorisation et d'un élément de données, l'élément de données étant fourni au module d'abonné (240) du dispositif de communication (200) par l'entité de gestion d'abonnement (300), dans laquelle le deuxième secret d'autorisation est fourni ensemble avec un enregistrement d'événement fournissant des informations de téléchargement de profil d'abonnement comprenant des informations d'entité de préparation de données de gestionnaire d'abonnement améliorée, SM-DP+, et un identifiant de correspondance, et dans laquelle l'enregistrement d'événement est protégé par l'entité SM-DS (300a), dans laquelle l'enregistrement d'événement est protégé à l'aide d'un MAC et l'élément de données utilisé dans le calcul du deuxième MAC par l'entité SM-DS (300a) comprend l'enregistrement d'événement, et dans laquelle la vérification de l'enregistrement d'événement protégé comprend la vérification du MAC par le module d'abonné, et dans laquelle le module d'abonné (240) du dispositif de communication (200) est configuré avec un premier secret d'autorisation et calcule un premier MAC sur l'élément de données à l'aide du premier secret d'autorisation en tant que clé, et dans laquelle, conformément au critère de correspondance, les deuxièmes informations d'autorisation correspondent au premier secret d'autorisation uniquement lorsque le deuxième MAC est identique au premier MAC.
